# EUROPEAN PATENT APPLICATION

(11) **EP 2 487 347 A1**
(43) Date of publication of application: **15.08.2012**
(21) Application number: 09850226.3
(22) Date of filing: 06.10.2009
(51) Int. Cl.: F02B 33/42, F02B 37/02, F02B 37/04

(54) **TURBOCHARGING SYSTEM FOR INTERNAL COMBUSTION ENGINE**

(71) Applicant: Toyota Jidosha Kabushiki Kaisha, Toyota-shi, Aichi 471-8571 (JP)
(72) Inventor: TAKAMIYA, Fumio, Toyota-shi Aichi 471-8571 (JP); YOEDA, Keiji, Toyota-shi Aichi 471-8571 (JP); KATO, Kichiro, Toyota-shi Aichi 471-8571 (JP); YAMANE, Naruto, Toyota-shi Aichi 471-8571 (JP); SUGIYAMA, Satoshi, Toyota-shi Aichi 471-8571 (JP); SUGANUMA, Hiroyuki, Toyota-shi Aichi 471-8571 (JP)
(74) Representative: Intès, Didier Gérard André
(86) International application number: PCT/JP2009/067419
(87) International publication number: WO 2011/042954

(57) **Abstract**

A supercharging system for an internal combustion engine comprising a turbocharger (10) including a compressor (10a) and a turbine (10a), and a pressure wave supercharger (20) performing supercharging of the internal combustion engine (1) by increasing a pressure of gas led into each of cells (23) from an intake gas inlet port (24) using a pressure wave of exhaust gas led into the cell (23) front an exhaust gas inlet port (28a) and discharging from an intake gas outlet port (25) to an intake passage (3) the gas pressurized, wherein a case (21) of the pressure wave supercharger (20) is connected to the intake passage (3) upstream of the compressor (10a) via the intake gas inlet port (24), and is connected to the intake passage (3) downstream of the compressor (10a) via the intake outlet port (25), and is connected to an exhaust passage (4) downstream of the turbine (10b) via the exhaust inlet port (28a) and an exhaust gas outlet port (28b).

## Description

### Technical Field

The present invention relates to a supercharging system for an internal combustion engine including a turbocharger and a pressure wave supercharger that performs supercharging by utilizing pressure wave energy of exhaust gas.

### Background Art

There is known a supercharging apparatus provided with a turbocharger and a pressure wave supercharger that performs supercharging by utilizing pressure wave energy of exhaust gas (see patent literature 1). In the supercharging apparatus, the pressure wave supercharger is arranged so that exhaust gas is led from an exhaust passage being provided on a downstream side of a turbine of the turbocharger. Furthermore, the pressure wave supercharger is arranged so as to discharge intake gas to an intake passage being provided on an upstream side of a compressor of the turbocharger. In addition, there are Patent Literatures 2 and 3 as prior art references in relation to the present invention.

### Citation List

### Patent Literatures

Patent Literature 1: JP-A-60-178929
Patent Literature 2: JP-A-62-060929
Patent Literature 3: JP-U-58-108256

### Summary of Invention

### Technical Problem

As well known, the intake side and the exhaust side are connected to each other inside the pressure wave supercharger. Thereby, depending on operating states of an internal combustion engine and so on, exhaust gas may flow in the intake passage via the pressure wave supercharger. In the apparatus of the Patent Literature 1, the pressure wave supercharger is arranged on the upstream side of the compressor. Thereby, in a case that the exhaust gas flows into the intake passage, there is a possibility that a particulate material contained in the exhaust gas contaminates the compressor. In this case, there is a possibility that a performance of the compressor is decreased and a supercharging performance is decreased.

In view of the foregoing, an object of the present invention is to provide a supercharging system for an internal combustion engine, which can supercharge the internal combustion engine from a low rotation range and can prevent an inflow of the exhaust gas into the compressor of the turbocharger.

### Solution to Problem

A supercharging system for an internal combustion engine of the present invention comprises a turbocharger that includes a turbine which is provided in an exhaust passage of the internal combustion engine, and a compressor which is provided in an intake passage of the internal combustion engine and is driven by the turbine; and a pressure wave supercharger that includes a case which is connected to the intake passage via an intake gas inlet port and an intake gas outlet port provided on one end face and is connected to the exhaust passage via an exhaust gas inlet port and an exhaust gas outlet port provided on the other end face opposing the one end face, and a rotor which is arranged in the case rotatably and divides an inside of the case into plural cells penetrating in a direction of a rotation axis line, and that performs supercharging of the internal combustion engine by increasing a pressure of gas led into each of the cells from the intake gas inlet port using a pressure wave of exhaust gas led into the cell from the exhaust, gas inlet port and discharging from the intake gas outlet port to the intake passage the gas pressurized, wherein the case of the pressure wave supercharger is connected to the intake passage upstream of the compressor via the intake gas inlet port, and is connected to the intake passage downstream of the compressor via the intake gas outlet port, and is connected to the exhaust passage downstream of the turbine via the exhaust gas inlet port and the exhaust gas outlet port.

According to the supercharging system of the present invention, the intake passage is provided with the compressor of the turbocharger and the pressure, wave supercharger in parallel with each other. Thereby, the exhaust gas not flows into the compressor even though the exhaust gas flows into the intake passage from the pressure wave supercharger. Accordingly, it is possible to present contamination of the compressor. In the supercharging, system of the present invention, the pressure wave supercharger is arranged on the exhaust passage at the downstream side of the turbine. In this case, the turbine can fully collect the exhaust gas energy. In the supercharging system of the present invention, it is possible to supercharge the internal combustion engine by the pressure wave supercharger and the turbocharger. As well-known, the pressure wave supercharged performs supercharging by using a pressure wave of the exhaust gas. Thereby, it is possible to supercharge the internal combustion engine even though a rotation number of the internal combustion engine is low. Accordingly, it is possible to supercharge the internal combustion engine from a low rotation range.

In one embodiment of the supercharging system of the present invention, the pressure wave supercharger may include a driving device which drives the rotor and is capable of varying a rotation number of the rotor. In this case, it is possible to change operation states of the pressure wave supercharger regardless of operation states of the internal combustion engine. According to this embodiment, since the rotation number of the rotor can be changed, it is possible to change timings to connect the cells with the intake gas outlet port appropriately. Thereby, it is possible to lead the intake gas from the intake passage to the exhaust passage via the pressure wave supercharger. Furthermore, it is possible to lead the exhaust gas from the exhaust passage to the intake passage via the pressure wave supercharger.

In one embodiment of the supercharging system of the present intention, the pressure, wave supercharger may be provided with a phase change mechanism which is capable of varying a position of the intake gas outlet port with respect to the exhaust gas inlet port by rotating around the rotation axis line at least either one of the one end face and the other end face. In this embodiment, by changing the position of the intake gas outlet port with respect to the exhaust gas inlet port, it is possible to change timings to connect the cells with the intake gas outlet port appropriately. Thereby, it is possible to lead the intake gas from the intake passage to the exhaust passage via the pressure wave supercharger. Furthermore, it is possible to lead the exhaust gas from the exhaust. passage to the intake passage via the pressure wave supercharger.

In one embodiment of the supercharging system of the present invention, the supercharging system may further comprise a supercharging control device which controls the pressure wave supercharger and the turbocharger so that the internal combustion engine is supercharged by the pressure wave supercharger when the rotation number of the internal combustion engine is within a predetermined low rotation range, and the internal combustion engine is supercharged by the turbocharger when the rotation number of the internal combustion engine is within a predetermined high rotation range which is higher than the low rotation range. As mentioned above, the pressure wave supercharger is capable of supercharging even though the rotation number of the internal combustion engine is low. Thereby, by controlling the operation of each supercharger in this manner, it is possible to supercharge the internal combustion engine from the low rotation range. In the high rotation range, since the internal combustion engine is supercharged by the turbocharger, it is possible to suppress increasing in size of the pressure wave supercharger.

In one embodiment of the supercharging system of the present invention, the exhaust passage may be provided with a bypass passage which leats the exhaust gas to the downstream side of the pressure wave supercharger by bypassing the pressure wave supercharger, and a bypass valve which opens and closes the bypass passage. In this case, by opening and closing the bypass valve, it is possible to adjust the amount of the exhaust gas which is led to the pressure wave supercharger.

In one embodiment of the supercharging system of the present invention, the exhaust passage may be provided with a bypass passage which leads the exhaust gas to the downstream side of the pressure wave supercharger by bypassing the pressure wave supercharger, and the pressure wave supercharger may be provided with a connection switching, device which is capable of switching between a connection state that the inside of the case is connected to the exhaust passage via the exhaust gas inlet port and the exhaust gas outlet port, and a disconnection that the exhaust gas inlet port and the exhaust gas outlet port are closed so that the connection in the connection state is disconnected. In this case, by switching the connection switching device to the disconnection position, it is possible to stop leading the exhaust gas into the pressure wave supercharger. Thereby, it is unnecessary to provide a valve on the bypass passage.

In this embodiment, the supercharging system may further comprise a connection control device which switches the connection switching device to the disconnection state when the internal combustion engine is supercharged by only the turbocharger. Thereby, it is possible to supercharge the internal combustion engine by only the turbocharger.

In one embodiment of the supercharging system of the present invention, the pressure wave supercharger may be provided with at least either one of a driving device and a phase change mechanism as a controlled object, the driving device driving the rotor and being capable of varying a rotation number of the rotor, and the phase change mechanism capable of varying a position of the intake gas outlet port with respect to the exhaust gas inlet port by rotating around the rotation axis line at least either one of the one end face and the other end face, and the supercharging system may further comprise a supercharging control device which controls the pressure wave supercharger and the turbocharger so that the internal combustion engine is supercharged by the pressure wave supercharger when the rotation number of the internal combustion engine is within a low rotation range which is less than a predetermined rotation number, and the internal combustion engine is supercharged by the turbocharger when the rotation number of the internal combustion engine is within a predetermined high rotation range which is higher than or equal to the predetermined rotation number, wherein the supercharging control device may include a calculation device and a re-acceleration preparation device, the calculation device calculating a target value of a control amount of the controlled object for controlling to operate the pressure wave supercharger in a state that a part of the intake gas passes through the intake passage to the exhaust passage via the pressure wave supercharger while the internal combustion engine is supercharged by the pressure wave supercharger, when the rotation number of the internal combustion engine is within the high rotation range and the rotation number of the internal combustion engine is expected to become less than the predetermined rotation number, and the re-acceleration preparation device controlling the controlled object so that the control amount of the controlled object becomes the target value calculated by the calculation device when the rotation number of the internal combustion engine becomes less than the predetermined rotation number. When the pressure wave supercharger is operated so that a part of the intake gas passes through to the exhaust passage, it is necessary to increase the rotation number of the rotor for becoming the same the supercharging pressure as compared with a case that the pressure wave supercharger is operated so that all of the intake gas is returned to the intake passage. In this embodiment, the pressure wave supercharger is operated so that a part of the intake gas passes through to the exhaust passage soon after the rotation number of the internal combustion engine becomes lower than the predetermined rotation number. Thereby, the rotor is driven at a high rotation number. Accordingly, it is possible to increase the rotation number of the rotor quickly when the internal combustion engine is requested to be re-accelerated. Thereby, since it is possible to increase the supercharging pressure quickly, it is possible to re-accelerate the internal combustion engine quickly.

In one embodiment of the supercharging system of the present invention, the pressure wave supercharger may be provided with at least either one of a driving device and a phase change mechanism as a controlled object, the driving device driving the rotor and being capable of varying a rotation number of the rotor, and the phase change mechanism capable of varying a position of the intake gas outlet port with respect to the exhaust gas inlet port by rotating around the rotation axis line at least either one of the one end face and the other end face, and the supercharging system may further comprise a supercharging control device which controls the pressure wave supercharger and the turbocharger so that the internal combustion engine is supercharged by the pressure wave supercharger when the rotation number of the internal combustion engine is within a predetermined low rotation range, and the internal combustion engine is supercharged by the pressure wave supercharger and the turbocharger when the rotation number of the internal combustion engine is within a predetermined medium rotation range which is higher than the low rotation range, and the internal combustion engine is supercharged by the turbocharger when the rotation number of the internal combustion engine is within a predetermined high rotation range which is higher than the medium rotation range, and which is capable of controlling the controlled object so that the exhaust gas is circulated to the intake passage from the exhaust passage via the pressure wave supercharger while the internal combustion engine is supercharged by the pressure wave supercharger, w/herein the supercharging control device may include an EGR control device which adjusts an amount of the exhaust gas circulated to the intake passage via the pressure wave supercharger by controlling the operation of the controlled object so as to be suppress a variation of an amount of air in the intake gas after starting of the turbocharger when the rotation number of the internal combustion engine changes to the medium rotation range from the low rotation range. According to this embodiment, since it is possible to suppress the variation of the amount of air when the turbocharger is started up, it is possible to suppress sudden increase of the amount of the air supplied to the cylinders. As well known, a nitrogen oxide (NOx) increases when the amount of the air supplied to the cylinders increases. Thereby, by suppressing the sudden increase of the amount of the air in this manner, it is possible to suppress an increase of the NOx when the turbocharger is started up.

In one embodiment of the supercharging system of the present invention, the internal combustion engine may be provided with a PCV passage, which connects with an inside of a crankcase of the internal combustion engine a section of the intake passage between the downstream side of a position where the case is connected via the intake gas inlet port and the upstream side of the compressor. In this case, it is possible to suppress flowing the blow-by gas into the pressure wave supercharger. Thereby, it is possible to prevent that the rotor is locked by oil contained in the blow-by gas.

In one embodiment of the supercharging system of the present invention, the internal combustion engine may be mounted on a vehicle, the pressure wave supercharger may be with a connection switching device which is capable of switching between a connection state that the inside of the case is connected to the exhaust passage via the exhaust gas inlet port and the exhaust gas outlet, port, and a disconnection state that the exhaust gas inlet port and the exhaust gas outlet port are closed so that the connection in the connection state is disconnected, and the supercharging system may comprise a pressure accumulation tank and a pressure accumulation control device, the pressure accumulation tank being capable of leading gas from the exhaust passage at the upstream of the turbine, capable of supplying gas to the exhaust passage at the upstream side of the turbine, and capable of storing pressurized gas inside thereof, and the pressure accumulation control device switching the connection switching device to the disconnection state and controlling the driving device so that the rotor is stopped when the vehicle decelerates. By controlling the rotor and the connection switching device in this manner, it is possible to store the exhaust gas in the pressure accumulation tank. Since it is unnecessary a valve for opening and closing the exhaust passage, it is possible to reduce costs.

In one embodiment of the supercharging system of the present invention comprising the supercharging control device, the supercharging system may further comprise an pressure, accumulation tank which is capable of leading gas from the exhaust passage at the upstream side of the turbine, capable of supplying gas to the exhaust passage at the upstream side of the turbine, and capable of storing pressurized gas inside thereof; and a valve device which is capable of switching between a connection position where the pressure accumulation tank is connected to the exhaust passage, and a disconnection position where the connection in the connection position is disconnected, therein the supercharging controls device may switch the valve device to the connection position when the rotation number of the internal combustion engine changes from the low rotation range to the high rotation range and the turbocharger is started. In this case, it is possible to assist in the operation of the turbocharger by the gas supplied from the pressure accumulation tank. Thus, it is possible to increase the rotation number of the turbine of the turbocharger quickly. Thereby, it is possible to suppress a variation of the supercharging pressure when a supercharger used for supercharging is switched from the pressure wave supercharger to the turbocharger. Accordingly, it is possible to suppress a variation of the torque of the internal combustion engine during the changeover.

In one embodiment of` the supercharging system of the present invention, the supercharging system may further comprise an pressure, accumulation tank which is capable of leading gas from the exhaust, passage at the upstream side of the turbine, capable of supplying gas to the exhaust passage at the upstream side of the turbine, and capable of storing pressurized gas inside thereof; a valve device which is capable of switching between a connection position where the pressure accumulation tank is connected to the exhaust passage and a disconnection position where the connection in the connection position is disconnected; and, a start assist control devise which switches the valve device to the connection position when a predetermined engine stop condition is satisfied in order to stop the internal combustion engine. In this case, it is possible to increase the pressure in the cylinder by assisting the operation of the pressure wave supercharger by gas in the pressure accumulation tank when the internal combustion engine is stopped. By stopping the internal combustion engine in this state, it is possible to stop the internal combustion engine while the pressure in the cylinder remains high. Thereby, since it is possible to increase the pressure in the cylinder quickly at the next startup, it is possible to start the internal combustion engine quickly.

### Brief Description of Drawings

Fig. 1 is a view schematically showing main portions of an internal combustion engine incorporated with a supercharging system according to a first embodiment of the present invention.
Fig. 2 is an enlarged view showing a pressure wave supercharger in Fig. 1.
Fig. 3 is a view showing an intake-side end of the pressure wave supercharger viewed from the arrow III in Fig. 2.
Fig. 4 is a view showing an exhaust-side end of the pressure wave supercharger viewed from the arrow IV in Fig. 2.
Fig. 5 is a view showing a valve plate of the pressure wave supercharger viewed from the arrow V in Fig. 2.
Fig. 6 is a view showing a part of the pressure wave supercharger being operated in a normal mode developed among a rotation direction of a rotor.
Fig. 7 is a view showing a part of the pressure wave supercharger being operated in an EGR mode developed along a rotation direction of a rotor.
Fig. 8 is a view showing correspondence relationships among a rotation number and a torque of the internal combustion engine, and supercharging modes.
Fig. 9 is a flowchart showing a supercharging mode control routine executed by an ECU.
Fig. 10 is a view showing a of the internal combustion engine in TC supercharging mode.
Fig. 11 is a view showing a state of the internal combustion engine in PW supercharging mode.
Fig. 12 is a view schematically showing main portions of an internal combustion engine incorporated with a supercharging system according to a second embodiment of the present invention.
Fig. 13 is a view showing a case and a valve plate of a pressure wave supercharger according to the second embodiment.
Fig. 14 is a view an intake-side of the pressure wave supercharger in Fig. 13.
Fig. 15 is a view an exhaust-side of the pressure wave supercharger in Fig. 13.
Fig. 16 is a view showing a valve plate of the pressure wave supercharger in Fig. 1
Fig. 17 is a view schematically showing main portions of an internal combustion engine incorporated with a supercharging system according to a third embodiment of the present invention.
Fig. 18 is a view for describing a fourth embodiment of the present invention, and the view shows a part of a pressure wave supercharger being operated in a low supercharging mode developed along a rotation direction of a rotor in the present embodiment.
Fig. 19 is a view showing correspondence relationships among a rotation number of an internal combustion engine, a supercharging pressure, and supercharging modes, in the fourth embodiment.
Fig. 20 is a flowchart showing a supercharging mode control routine executed by an ECU in the fourth embodiment.
Fig. 21 is a subsequent flowchart of Fig. 20.
FIG. 22 is a view for describing a fifth embodiment of the present invention, and the view shows correspondence, relationships among a rotation number and torque of the internal combustion engine, and supercharging modes, in the present embodiment.
Fig. 23 is a flowchart showing a supercharging mode control routine executed by an ECU in the fifth embodiment.
Fig. 24 is a view schematically showing main portions of an internal combustion engine incorporated with a supercharging system according to a sixth embodiment of the present invention.
Fig. 25 is a flowchart a charging control routine executed by an ECU of the sixth embodiment.
FIG. 26 is a flowchart showing an assist control routine by the ECU of the sixth embodiment.
FIG. 27 is a flowchart showing a start assist control routine executed by the ECU of the sixth embodiment.

### Description of Embodiments

### (First Embodiment)

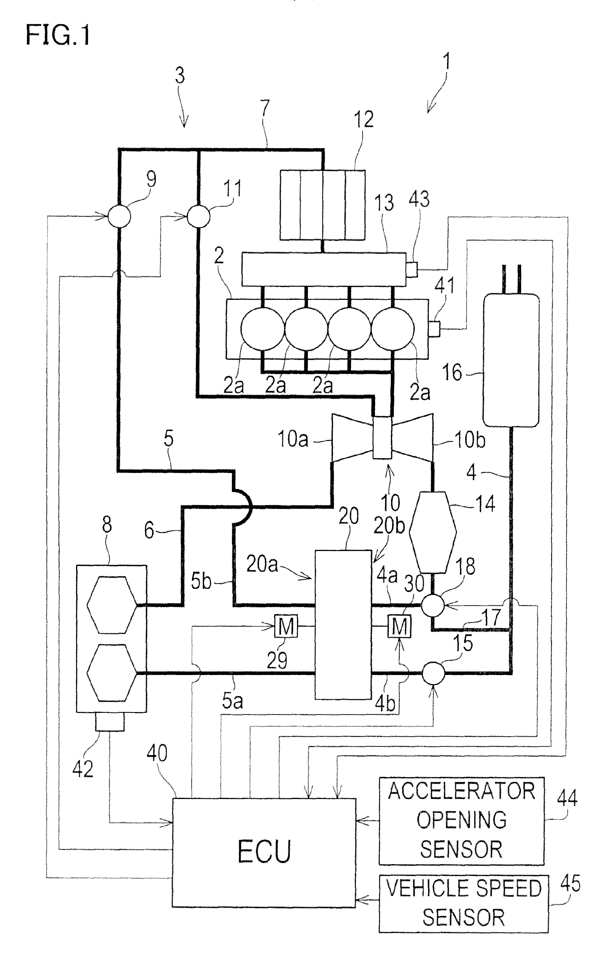

Fig. 1 schematically shows main portions of an internal combustion engine in which a supercharging system according to a first embodiment of the present invention is incorporated. The internal combustion engine (hereinafter, referred to as an engine) 1 is a diesel engine mounted on a vehicle as a traveling power source and includes an engine main body 2 plural cylinders 2a (four cylinders in FIG. 1). An intake passage 3 and an exhaust passage 4 are connected to each of the cylinders 2a.

The intake passage include a first branch passage 5, a second branch passage 6, and a common passage 7 to which the branch passages and 6 are connected. The intake passage 3 is provided with an air cleaner 8 that filters the intake gas. The branch passages 5, 6 diverge from the air cleaner 8. The first branch passage 5 is provided with an intake-side end 20a of a pressure wave supercharger 20 and a first control valve 9) that can open and close the first branch passage 5. The second branch passage 6 is provided with a compressor 10a of a turbocharger 10 and a second control valve 11 that can open and close the second branch passage 6. The common passage 7 is provided with an inter-cooler 12 for cooling intake gas and a surge tank 13. As shown in this figure, the intake passage 3 diverges again after passing through the surge tank 13 and is connected to the cylinders 2a.

The exhaust passage 4 is provided with a turbine 10b of the turbocharger 10, a catalyst 14 for cleaning the exhaust gas, an exhaust-side end 20b of the pressure wave supercharger 20, an exhaust gas control valve 15 that can open and close the exhaust passage 4, and a muffler 16 for sound deadening in order from the upstream of an exhaust gas flow direction. The exhaust passage 4 is provided with a bypass passage 17 and a switching valve 18. The bypass passage 17 leads the exhaust gas to flow by bypassing the pressure wave supercharger 20 and the exhaust gas control valve 15. The switching valve 18 selectively switches an exhaust gas flow to the pressure wave supercharger 20 or the bypass passage 17. By switching the exhaust gas flow in this manner, the switching valve 18 functions as a bypass valve according to the present invention.

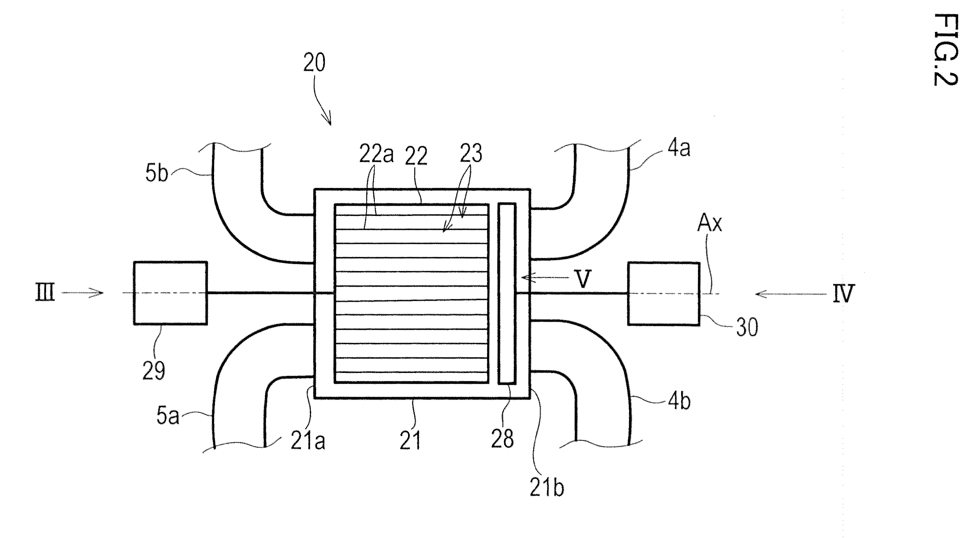

The turbocharger 10 and the pressure wave supercharger 20 win be described. The turbocharger 10 is a well known turbocharger. The turbocharger 10 rotates the compressor 10a by rotating, the turbine 10b provided in the exhaust passage 3 using exhaust gas, and thereby performs supercharging. The pressure wave supercharger 20 is a supercharger which increases a pressure of the intake gas led inside from the intake-side end 20a by using a pressure wave of exhaust gas led inside from the exhaust-side end 20b and thereby performs supercharging. As shown in an enlarged view in Fig. 2, the pressure wave supercharger 20 includes a cylindrical case 21 that is connected to the intake passage 3 at one end as the intake-side end 20a and is connected to the exhaust passage 4 at the other end as the exhaust-side end 20b. A rotor 22 is provided in the case 21. The rotor 22 is supported by the case 21 so as to be rotatable around an axis line Ax. In Fig.2, a gap between the case 21 and the rotor 22 is enlarged in order to facilitate understanding. Actually, the gap is negligible. The rotor 22 is provided with plural partition walls 22a located in the direction of the axis line Ax from one end of the rotor 22 to the other end of the rotor 22. The partition walls 22a divide the inside of the case 21 into plural cells 23 penetrating in the direction of the axis line Ax.

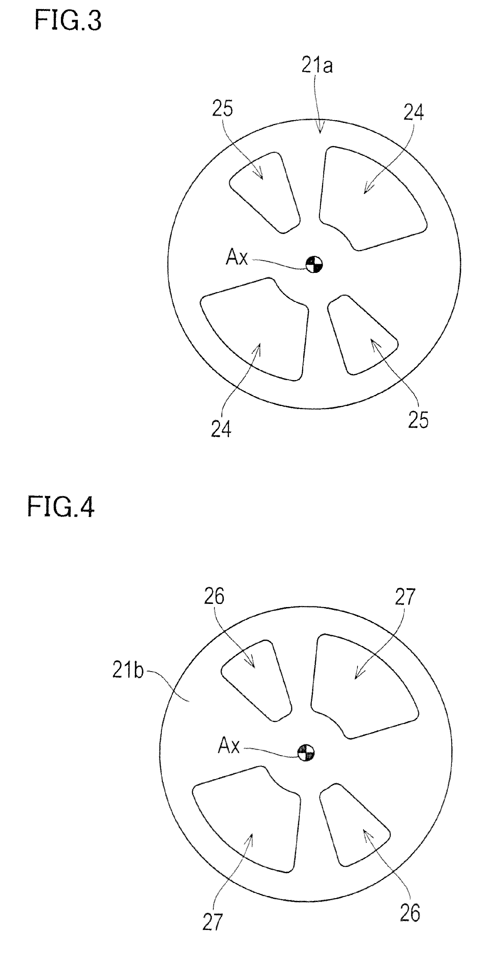

Fig. 3 shows an intake-side end 21 a of the case 21 viewed from the arrow III in Fig. 2. As shown in this figure, the intake-side end 21 a is provided with two intake gas inlet ports 24 and two intake gas outlet ports 25. As shown in this figure, the intake gas inlet port 24 and the intake gas outlet port 25 are arranged alternately in a circumferential direction on one end face of the case 21. The two intake gas inlet ports 24 are arranged symmetrically across the axis line Ax. Similarly, the two intake gas outlet ports 25 are also arranged symmetrically across the axis line Ax. A portion 5a of the first branch passage 5 on the upstream side of the direction of the intake, gas now than the pressure wave supercharger 20 is connected to each intake gas inlet port 24. Hereinafter, the portion 5a of the first branch passage 5 is referred to as an upstream section. On the other hand, a portion 5b of the first branch passage 5 on the downstream side of the direction of the intake gas flow than the pressure wave supercharger 20 is connected to each intake gas outlet port 25. Hereinafter, the portion 5b of the first branch passage 5 is referred to as a downstream section.

Fig. 4 shows an exhaust-side end 21b of the case 21 viewed from the arrow IV in FIG. 2. As shown in this figure, the exhaust-side end 21b is provided with two exhaust gas inlet ports 26 and two exhaust gas outlet ports 27. As shown in this figure, the exhaust gas inlet port 26 and the exhaust gas outlet port 27 are arranged alternately in a circumferential direction on the other end face of the case 21 opposing the one end face. As shown in this figure, the two exhaust gas inlet ports 26 are arranged symmetrically across the axis line Ax. Similarly, the two exhaust gas outlet ports 27 are also arranged symmetrically across the axis line Ax. A section 4a of the exhaust passage 4 on the upstream side of the direction of the exhaust gas flow than the pressure wave supercharger 20 is connected to each exhaust gas inlet port 26. Con the other hand, a section 4b of the exhaust passage 4 on the downstream side of the direction of the exhaust gas flow than the pressure wave supercharger 20 is connected to each exhaust gas outlet port 27.

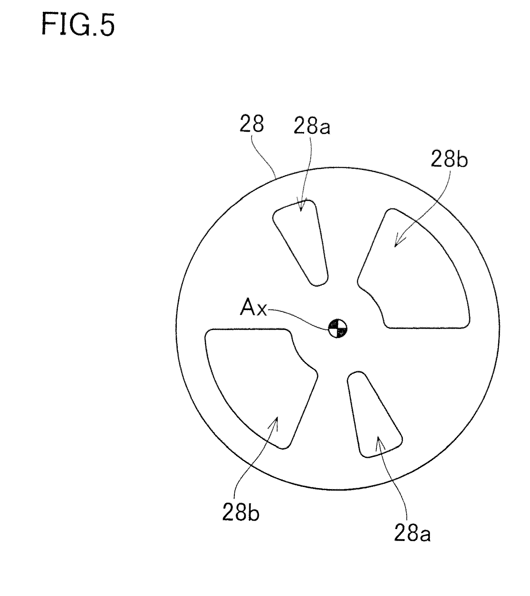

As shown in Fig. 2, a valve plate 28 is provided in the case 21. In Fig.2, a gap between the valve plate 28 and the case 21 is enlarged in order to facilitate understanding. Moreover, a gap between the valve plate 28 and the rotor 22 is enlarged in order to facilitate understanding. Actually, these gaps are negligible. The plate 28 is supported by the case 21 so as to be rotatable around the line Ax. Fig. 5 the valve plate 28 viewed from the arrow V in Fig. 2. As shown in this figure, the plate 28 is provided with two exhaust gas inlet ports 28a and two exhaust gas outlet ports 28b similarly to the exhaust-side end 21b of the case 21. The exhaust gas inlet port 28a and the exhaust gas outlet port 28b are arranged in a circumferential direction alternately. The two exhaust gas inlet ports 28a are arranged symmetrically across the axis line Ax. The two exhaust gas outlet ports 28b are arranged symmetrically across the axis line Ax. The valve plate 28 is arranged in the case 21 so that the exhaust gas inlet port. 28a overlaps with the exhaust gas inlet port 26 of the case 21 and the exhaust gas outlet port 28b overlaps with the exhaust gas outlet port 27 of the case 21. A length in the circumferential direction of the exhaust gas inlet port 28a of the valve plate 28 is shorter than a length in the circumferential direction of the exhaust gas inlet port 26 of the case 21. Similarly, a length in the circumferential direction of the exhaust gas outlet port 28b of the valve plate 28 is shorter than a length in the circumferential direction of the exhaust gas outlet port 27 of the case 21. Thereby, even though the valve plate 28 rotates, if rotation angle is within a prescribed angle, the exhaust gas inlet port 26 and the exhaust gas inlet port 28a remain overlapped with each other. In this case, the exhaust gas outlet port 27 and the exhaust gas outlet port 28b also remain overlapped with each other. In the pressure wave supercharger 20. gas is led into the cell 23 via the exhaust gas inlet port 26 of the case 21 and the exhaust gas inlet port 28a of the valve plate 28. Thereby, the exhaust gas inlet port 26 and the exhaust gas inlet port 28a correspond to an exhaust gas inlet port of the present invention. Gas is discharged from the cell 23 via the exhaust gas outlet port 27 of the case 21 and the exhaust gas outlet port 28b of the valve plate 28. Thereby, the exhaust gas outlet port 27 and the exhaust gas outlet port 28b correspond to an exhaust gas outlet port of the present intention.

As shown in Fig. 2, the pressure, wave supercharger 20 includes a first motor 29 as a driving device for rotating the rotor 22 and a second motor 30 for adjusting a position of the valve plate 28 witch respect to the exhaust-side end 21b of the case 21. The first motor 29 rotates the rotor ?2 in a predetermined direction so that the cells 23 are connected to the intake gas inlet port 24, the exhaust gas inlet port 28a, the intake gas outlet port 25, and the exhaust gas outlet port 28b in order. The second motor 30 can rotate the valve plate 28 clockwise and counterclockwise. The second motor 30 rotates the valve plate 28 to change positions of the exhaust gas inlet port 28a and the exhaust gas outlet port 28b of the valve plate 28 with respect to the exhaust gas inlet port 26 and the exhaust gas outlet port 27 of the case 21. Accordingly, the valve plate 28 and the second motor 30 correspond to a phase change mechanism of the present invention.

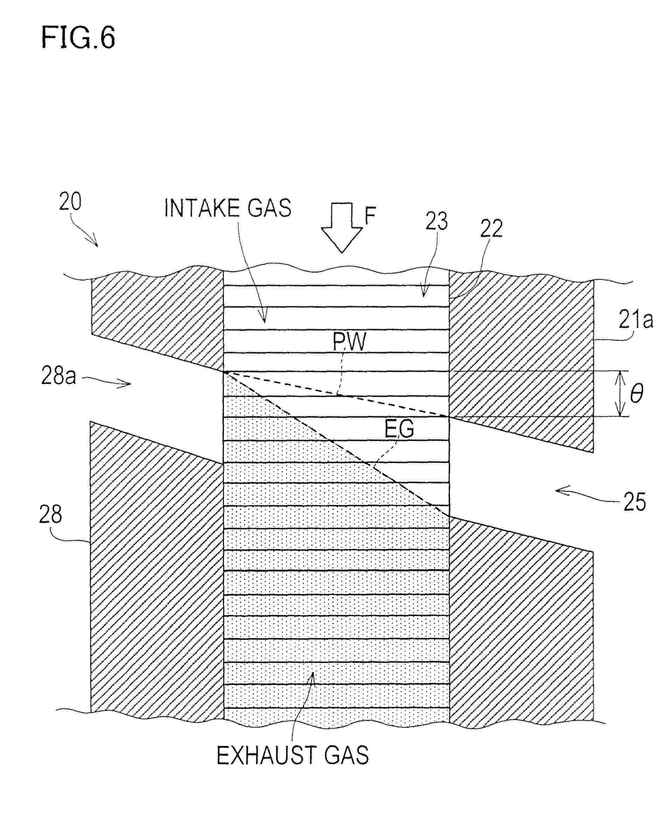

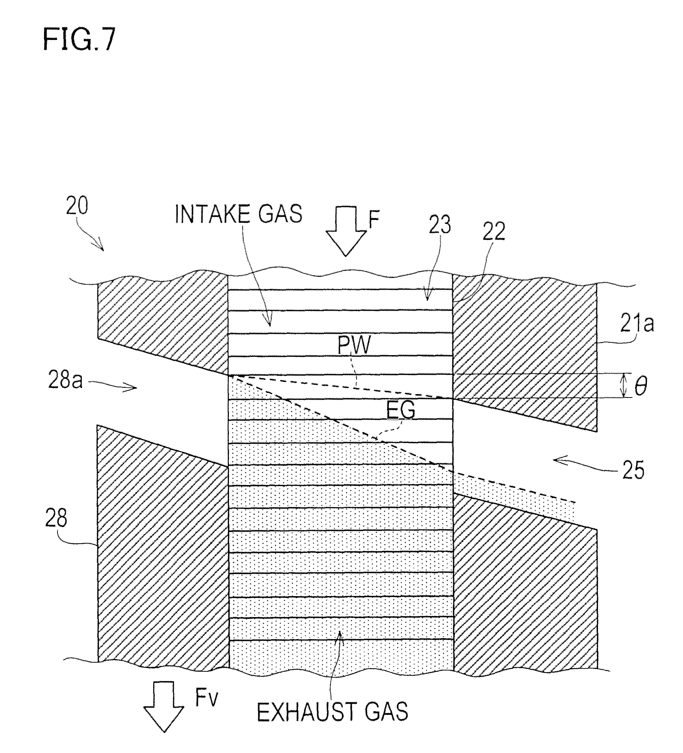

The pressure wave supercharger 20 is operated in two operation modes, that is, a normal mode and an EGR mode. In the normal mode, the pressure, wave supercharger 20 is operated so as to discharge only intake gas to the intake passage 3. In the EGR mode, the pressure, wave supercharger 20 is operated so as to discharge the intake gas and exhaust gas to the intake passage 3. These operation modes are switched by adjusting the rotational speed (rotation number) of the rotor 22 and positions of the valve plate 28. The operation modes will be described with reference to Figs. 6 and 7. Fig. 6 shows a part of the pressure wave supercharger 20 being operated in the mode developed along the rotation direction of the rotor 22. Fig. 7 shows a part of the pressure wave supercharger 20 being operated in the EGR mode developed along the rotation direction of the rotor 22. In these figures, the cells 23 move from the top to bottom as indicated by the arrow F in the figures.

The normal mode will be described with reference to Fig. 6. As shown in this figure, intake gas is charged in each cell 23 until one end of the cell 23 is connected with the exhaust gas inlet port 28a. When the one end of the cell 23 is connected with the exhaust gas inlet port 28a in this state, the exhaust gas and pressure wave thereof are led into the cell 23. The exhaust gas and the pressure wave move in the cell 23 from the exhaust gas side to the intake gas side. In this figure, the broken line PW shows a movement of the pressure wave. The broken line EG shows a movement of the exhaust gas. As shown by these broken lines, moving velocity of the pressure wave is faster than moving velocity of the exhaust gas. As shown in this figure, in the normal mode, the cell 23 connects with the intake gas outlet port 25 when the pressure wave reaches the other end of the cell 23. Since the pressure wave presses the intake gas in the cell 23 toward the intake gas side, the intake gas is pushed out to the downstream section 5b when the other end of the cell 23 connects with the intake gas outlet port 25 in this manner. Thereafter, as shown in this figure, in the normal mode, the cell 23 is disconnected from the intake gas outlet port 25 when the exhaust gas reaches the other end of the cell 23. Thereby, it is possible to prevent inflow of the exhaust gas to the intake passage 3. Although it is not shown, the cell 23 thereafter connects with the exhaust gas outlet port 28b. The exhaust gas in the cell 23 is discharged to the exhaust passage 4 at this time. Thereafter, the cell 23 connects with the intake gas inlet port 24. Thereby, the cell 23 is charged with the intake gas. After this, by these operations are repeated, the engine 1 is supercharged. In this manner, in the normal mode, the rotor 22 and the valve plate 28 are controlled so as to do the following operations. The cell 23 connects with the intake gas outlet port 25 when the pressure wave reaches the other end of the cell 23. The cell 23 is disconnected from the intake gas outlet port 25 when the exhaust gas reaches the other end of the cell 23. The rotation number of the first motor 29 may be set in accordance with the rotation number of the engine as with a publicly known pressure wave supercharger.

Next, the EGR mode will be described with reference to Fig. 7. In this figure, similarly to Fig. 6, the broken line PW shows the movement of the pressure wave. Furthermore, the broken line EG shows the movement of the exhaust gas. As shown by the broken line EG, in the EGR mode, the rotation speed of the rotor 22 is decreased so that the exhaust gas reaches the other end of the cell 23 before the cell 23 is disconnected from the intake gas outlet port 25. Furthermore, in the EGR mode, the position of the valve plate 28 is adjusted so that the cell 23 connects with the intake gas outlet port 25 when the pressure wave reaches the other end of the cell 23 even though the rotation speed of the rotor 22 is decreased in this manner. Specifically, the valve plate 28 is rotated at a predetermined angle in the same direction as the rotation direction of the rotor 22 as shown by the arrow Fv. That is, the valve plate 28 is rotated so gas to decrease an angle (hereafter referred to as an offset angle) θ between the exhaust gas inlet port 28a and the intake gas outlet port 25. In the EGR mode, by controlling the rotor 22 and the valve plate 28 in this manner, the exhaust gas is led into the intake gas outlet port 25 as shown in this figure. Accordingly, it is possible to circulate the exhaust gas to the intake passage 3 while supercharging the engine 1 by the pressure wave supercharger 20.

The turbocharger 10 and the pressure wave supercharger 20 are selectively used in accordance with operation states of the engine 1. Moreover, the normal mode and the EGR mode of the pressure wave supercharger 20 are also selectively used in accordance with operation states of the engine 1. The engine 1 is supercharged in three supercharging modes, that is, a PW supercharging mode, an EGR supercharging mode, and a TC supercharging mode. In the PW supercharging mode, the pressure wave supercharger 20 is operated in the normal mode. In the EGR supercharging mode, the pressure wave supercharger 20 is operated in the EGR mode. In the TC supercharging mode, the engine 1 is supercharged by the turbocharger 10. The three supercharging modes are switched in accordance with an operation state of the engine 1 to be specified by the rotation number and the torque of the engine 1.

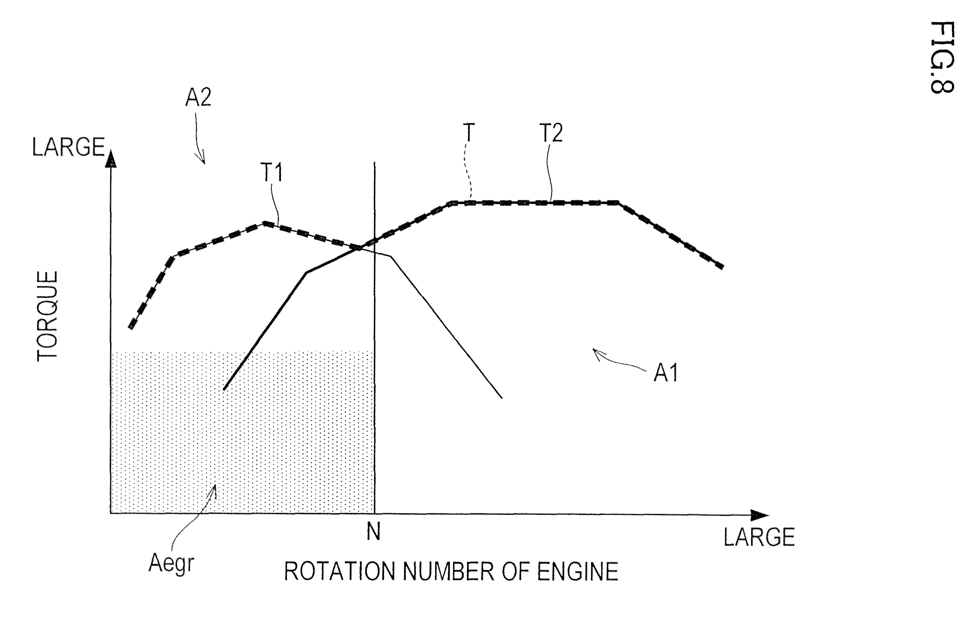

Correspondence relationships among the operation states of the engine 1 and the supercharging modes will be described with reference to Fig. 8. Fig. 8 provides a map that shows the correspondence relationships among the rotation number and the torque of the engine 1, and the supercharging modes. A line T1 in this figure shows a relationship between the rotation number and the torque of the engine 1 when the engine 1 is supercharged by the pressure wave supercharger 20. A line T2 in this figure shoes a relationship between the rotation number and the torque of the engine 1 when the engine 1 is supercharged by the turbocharger 10. As shown in this figure, in a high rotation range A1 that the rotation number of the engine 1 is higher than or equal to the rotation number N, the torque increases by using the turbocharger 10. In a low rotation range A2 that the rotation number of the engine 1 is smaller than the rogation number N, the torque increased by using the pressure wave supercharger 20. Accordingly, when the operation state of the engine 1 is in the high rotation range A1, the TC supercharging mode is used. When the operation state of the engine 1 is in the low rotation range A2, the PW supercharging mode is used. The exhaust gas circulates to the intake passage 3 when the engine 1 operates on as partial load. The EGR supercharging mode is selected when the operation state of the engine 1 is in an EGR range Aegr in FIG. 8. As shown in this figure, the EGR range Aegr is provided within the low rotation range A2.

An engine control unit (ECU) 40 controls switching between the supercharging modes. The ECU 40 is a well-known computer unit which is configured as a computer including a microprocessor and peripheral devices, such as a RAM and a ROM, which are necessary for the operation of the microprocessor. The ECU 40 controls operation states of the engine I based on output signals from various sensors provided to the engine 1. For example, the ECU 40 calculates an amount of fuel to be injected into the cylinder 2a in accordance with operation states of the engine 1. The ECU 40 controls a fuel injection valve (not shown) so as to inject the calculated amount of fuel into the cylinder 2a. The ECU 40 connects with a crank angle sensor 41, an air flow meter 42, a supercharging pressure sensor 43, and an accelerator opening sensor 44. The crank angle sensor 4 output a signal corresponding to the rotational speed (rotation number) of the engine 1. The air flow meter 42 output a signal corresponding to an amount of the intake air of the engine 1. The supercharging pressure sensor 43 outputs a signal corresponding to the pressure in the surge tank 13, that is, the supercharging pressure. The accelerator opening sensor 44 output a signal corresponding to an accelerator opening. The ECU 40 also connects with a vehicle speed sensor 45 which outputs a signal corresponding to the speed of a vehicle mounted with the engine 1. In addition to the above sensors, various sensors are further connected to the ECU 40, but they are omitted in the figure.

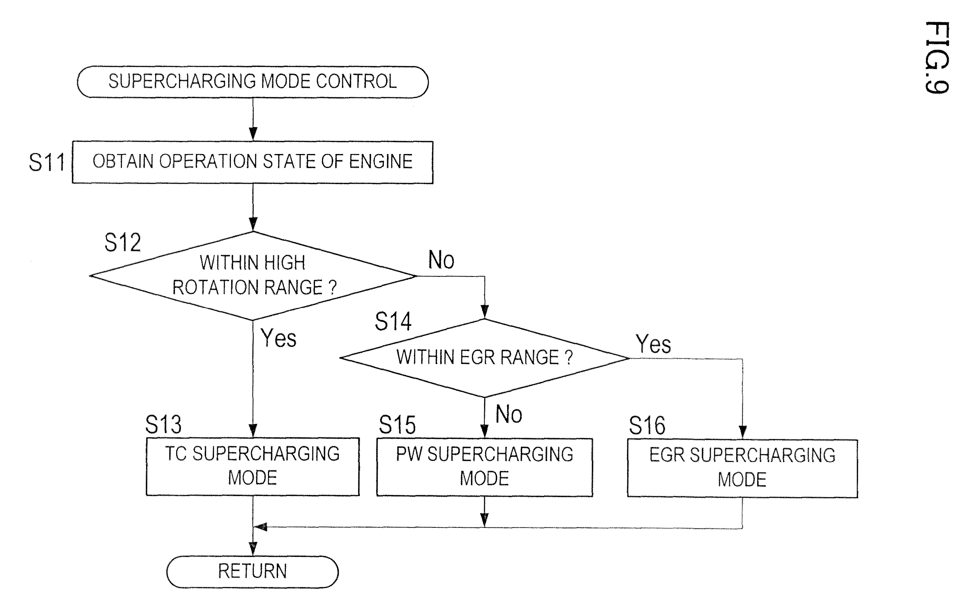

Fig. 9 shows a supercharging mode control routine executed by the ECU 40 repeatedly in a predetermined cycle during operation of the engine 1 in order to control switching of the supercharging modes. By executing the control routine, the ECU 40 functions as a supercharging control device of the present invention. In the control routine, the ECU 40 first obtains the operation state of the engine 1 in Step S11. The ECU 40 obtains the rotation number of the engine 1, the amount of the intake air, the supercharging pressure, and the accelerator opening as the operation state of the engine 1. In this process, the torque of the engine 1 and the like is calculated based on the amount of the intake air and the like. Furthermore, in this process, the ECU 40 also obtains the speed of the vehicle mounted with the engine 1.

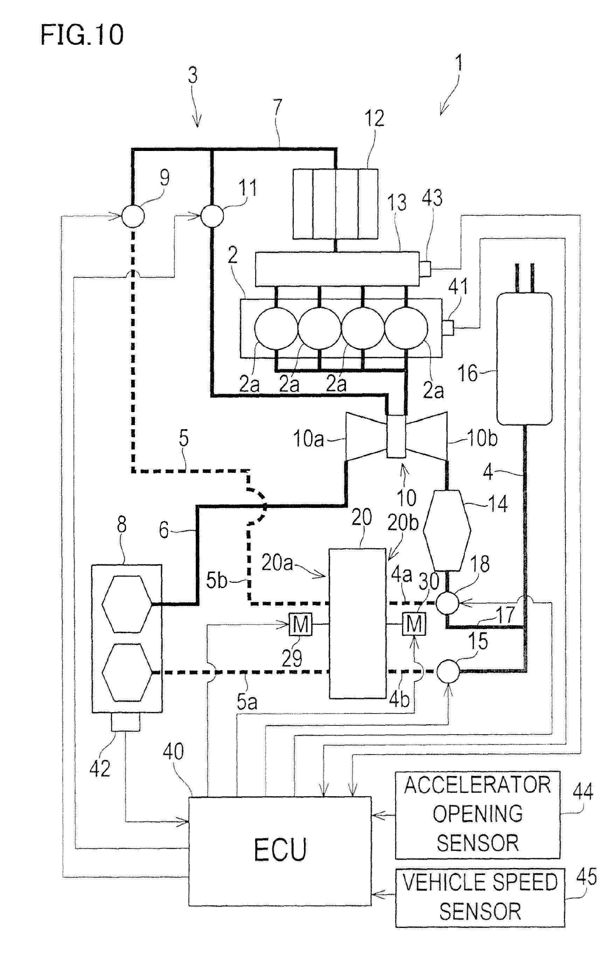

In next step S12, the ECU 40 determines whether or not the operation state of the engine 1 is within the high rotation range A1. This determination may be performed by storing the map of Fig. 8 in the ROM of the ECU 40 and referring the map, for example. If the ECU 40 determines that the operation state of the engine 1 is within the high rotation range A1, the ECU 40 proceeds to step S13 and switches the supercharging mode to the TC supercharging mode. Specifically, the ECU 40 controls the first control valve 9 to be fully closed and controls the second control valve 11 to be fully opened. The ECU 40 also controls the switching valve 18 so as to lead the exhaust gas into the bypass passage 17 and controls the exhaust gas control valve 15 to be fully closed. Thereby, as shown in Fig. 10, supercharging by the pressure wave supercharger 20 is prevented, and the engine 1 is supercharged by only the turbocharger 10. In Fig. 10, broken lines show that no gas flows through the corresponding parts of the intake passage 3 and the exhaust passage 4. If the supercharging mode is already the TC supercharging mode before the step S13, the ECU40 maintains the TC supercharging mode. Thereafter, the ECU 40 ends the current control routine.

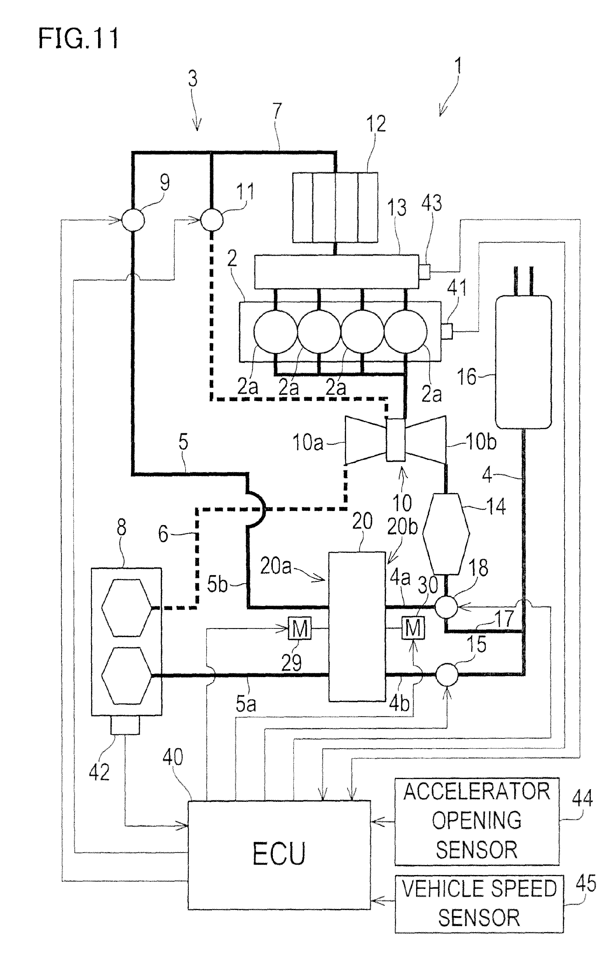

On the other hand, if the ECU 40 determines that the operation state of the engine is outside the high rotation range A1, the ECU 40 proceeds to step S14 and determines whether or not the operation state of the engine 1 is within the EGR range Aegr. This determination may also be performed by referring the map of the Fig. 8. If the ECU 40 determines that the operation state of the engine is outside the EGR range Aegr, the ECU 40 proceeds to step S15 and switches the supercharging mode to the PW supercharging mode. Specifically, the ECU 40 controls the first control valve 9 to be fully opened and controls the second controls valve 11 to be fully closed. The ECU 40 also controls the switching valve 18 so as to lead the exhaust gas into the pressure wave supercharger 20 and control the exhaust gas controls valve 15 to be fully opened. And, the ECU 40 controls the first motor 29 and the second motor 30 so that the pressure wave supercharger 20 operates in the normal mode. In this case, as shown in Fig. 11, supercharging by the turbocharger it is presented, and the engine 1 is supercharged by only the pressure wave supercharger 20. In this figure, similarly so Fig. 10, broken lines show that no gas flows through the corresponding parts of the intake passage 3 and the exhaust passage 4. If the supercharging mode is already the PW supercharging mode before the step S15, the ECU40 maintains the PW supercharging mode. Thereafter, the ECU 40 ends the current control routine.

On the other hand, if the ECU 40 determines that the operation state of the engine 1 is within the EGR range Aegr, the ECU 40 proceeds to step S16 and switches the supercharging mode to the EGR supercharging mode. Specifically, the ECU 40 controls the first control valve 9 to be fully opened and controls the second control valve 11 to be fully closed. The ECU 40 also controls the switching valve 18 so as to lead the exhaust gas into the pressure wave supercharger 20 and controls the exhaust gas control valve 15 to be fully opened. And, the ECU 40 controls the first motor 29 and the second motor 30 so that the pressure wave supercharger 20 operates in the EGR mode. Thereby, supercharging by the turbocharger 10 is prevented. The engine 1 is supercharger by the pressure wave supercharger 20 while the exhaust gas is circulated to the intake passage 3. Thereby, the EGR supercharging mode also allows the gas to flow through the intake passage 3 and the exhaust passage 4 as shown in Fig. 11. If the supercharging mode is already the EGR supercharging mode before the step S16, the ECU40 maintains the EGR supercharging mode. Thereafter, the ECU 40 ends the current control routine.

According to the first embodiment, since the turbocharger 10 and the pressure wave supercharger 20 are arranged in parallel to each other on the intake gas side, it is possible to present that the exhaust gas flows into the compressor 10a even though the exhaust gas is circulated from the pressure wave supercharger 20 to the intake passage 3. Thereby, it is possible to prevent the inside of the compressor 10a from being contaminated with particulate materials in the exhaust gas. On the other hand, the turbocharger 10 and the pressure wave supercharger 20 are arranged in series on the exhaust gas side so that the turbocharger 10 is positioned upstream of the pressure, wave supercharger 20. Thereby, the turbine 10b can fully collect the exhaust gas energy.

In the present embodiment, it is possible to supercharge the engine 1 by using the turbocharger 10 and the pressure wave supercharger 20. As shown in Fig. 8, the pressure wave supercharger 20 is capable of supercharging from the low rotation range. In the present embodiment, in the low rotation range, the engine 1 is supercharged by the pressure wave supercharger 20. And, in the high rotation range, the engine 1 is supercharged by turbocharger 10. Thereby, the torque of the engine 1 varies as shown by the broken line T in Fig. 8. Thus, it is possible to keep output of the engine high from the low rotation range to the high rotation range. Furthermore, since it is possible to supercharger the engine 1 appropriately from the low rotation range, it is possible to improve the response of the engine 1.

In addition, in the present embodiment, since the exhaust gas is circulated to the intake passage 3 via the pressure wave supercharger 20, it is possible to omit a passage for circulating the exhaust gas and a control valve for adjusting the flow rate of circulating exhaust gas. Furthermore, since it is possible to decrease a pressure loss in a flow path for circulating the exhaust gas, it is possible to increase an amount of the exhaust which is circulated to the intake passage 3 from the low rotation range as compared with the conventional technique. Thereby, it is possible to reduce exhaust emissions. In addition, it is possible to increase the pressure of the exhaust gas circulated by the pressure wave supercharger 20.

### (Second Embodiment)

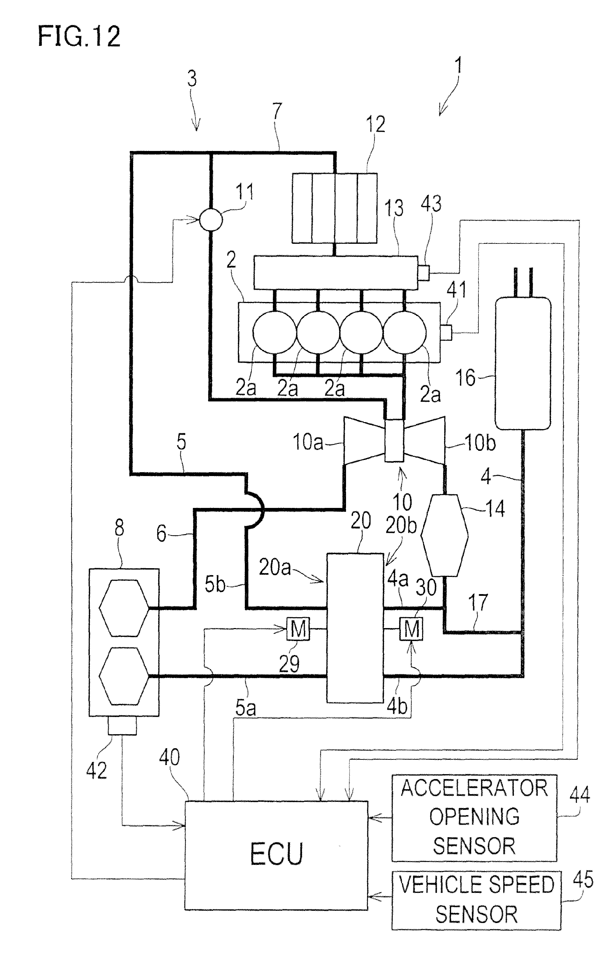

A second embodiment of the present invention will be described with reference to Figs. 12 to 16. In the second embodiment, the same components as those in the first embodiment are denoted by the same reference numeral, and descriptions thereof will be omitted. Fig. 12 schematically shows main portions of an internal combustion engine in which a supercharging system according to the second embodiment of the present invention is incorporated. As shown in Fig. 12, in the second embodiment, the first control valve 9. the exhaust gas control valve 15, and the switching valve 18 are omitted.

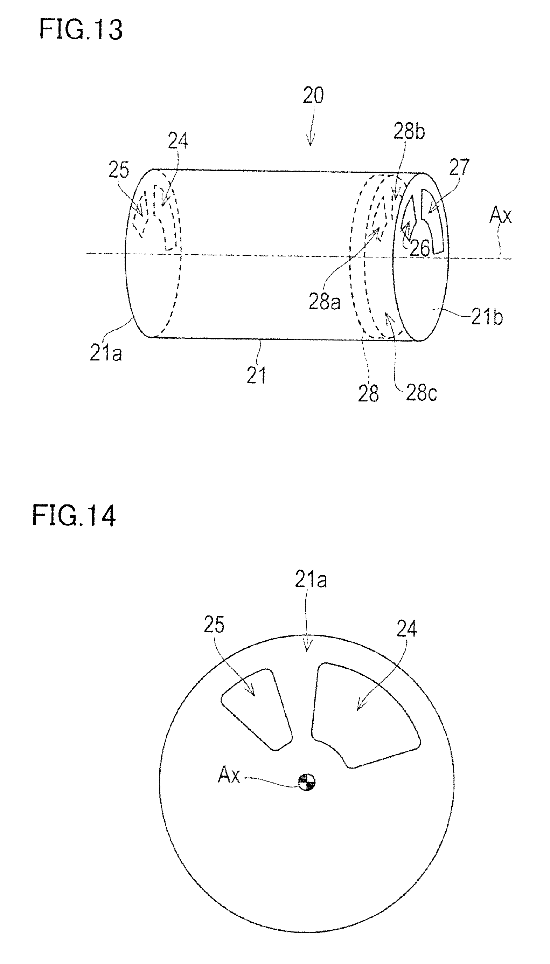

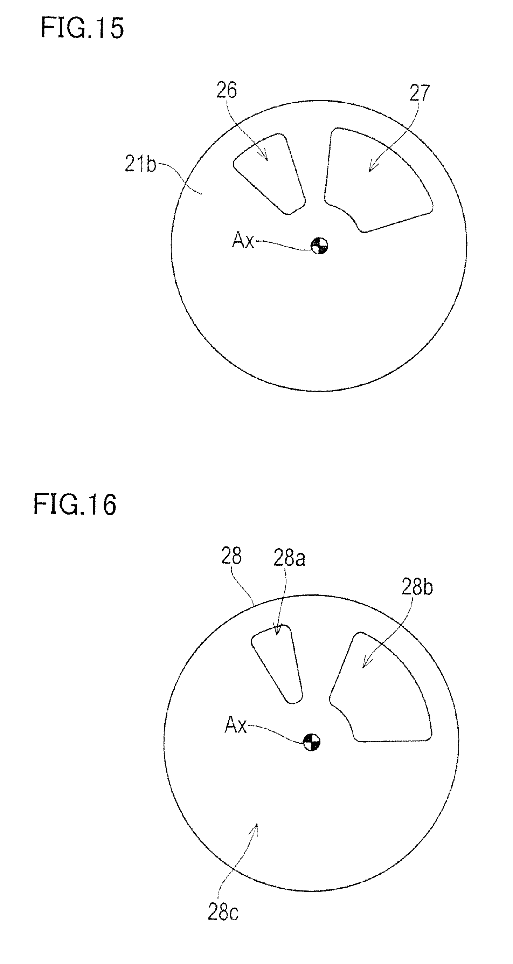

Fig. 13 shows the case 21 and the valve plate 28 of the pressure wave supercharger 20 according to the second embodiment. The other parts are the same as those in the first embodiment, hence, an illustration whereof is omitted. In Fig. 13, a gap between the case 21 and the valve plate 28 is also enlarged. Fig. 14 shows the intake-side end 20a of the pressure wave supercharger 20. Fig. 15 shows the exhaust-side end 20b. As shown in Fig. 14, in the present embodiment, a half of the intake-side end 20a is provided with one intake gas inlet port 24 and one intake gas outlet port 25, and the other half is closed. As shown in Fig. 15, a half or the exhaust-side end 20b is also provided with one exhaust gas inlet port 26 and one exhaust gas outlet port 27, and the other half is closed. As shown in Fig. 13, the intake-side end 20a and the exhaust-side end 20b are provided for the case 21 so that the closed parts face to each other.

Fig. 16 shows the valve plate 28 according to the present embodiment. As shown in this figure, a half of the valve plate 28 is also provided with one exhaust gas inlet port 28a and one exhaust gas outlet port 28b. The other half of the valve plate 28 is provided with a flat disconnection section 28c. In the present embodiment, the valve plate 28 is controlled in the connection state and the disconnection state. In the connection state, the exhaust gas inlet port 26 of the case 21 and the exhaust gas inlet port 28a of the valve plate 28 are overlapped with each other, and the exhaust gas outlet port 27 of the case 21 and the exhaust gas outlet port 28b of the valve plate 28 are overlapped with each other. In the connection, by adjusting the offset angle θ, the operation mode of the pressure wave supercharger 20 is switched between the normal mode and the EGR mode. On the other hand, in the disconnection state, the intake gas inlet port 24 and the intake gas outlet port 25 of the case 21 are closed by she disconnection section 28c. Accordingly, the valve plate 28 corresponds to a connection switching device of the present intention.

In the present embodiment, similarly to the first embodiment, the supercharging mode is switched to the PW supercharging mode, the EGR supercharging mode, and the TC supercharging mode. These supercharging modes are also switched by the control routine in Fig. 9, similarly to the first embodiment. In the PW supercharging, of the present embodiment, the second control valve 11 is fully closed and the value plate 28 is switched to the connection state. Furthermore, the offset angle θ is adjusted so that the pressure wave supercharger 20 operates in the normal mode. In the EGR supercharging mode, the second control valve 11 is also fully closed and the valve plate 28 is also switched to the connection state. On the other hand, the offset angle θ is adjusted so that the pressure wave supercharger 20 operates in the EGR mode.

In the TC supercharging mode, the second control valve 11 is fully opened and the valve plate 28 is switched to the disconnection state. Thereby, since it is possible to prevent the inflow of the intake gas into the pressure wave supercharger 20, it is possible to supercharger the engine 1 by only the turbocharger 10. Moreover, in the TC supercharging mode, the rotor 22 is stopped. By controlling the valve plate 28 as mentioned above, the ECU40 functions as a connection control device of the present intention.

According to the second embodiment, since it is possible to omit the first control valve 9, the exhaust gas control valve 15, and the switching valve 18, it is possible to reduce the costs. In the present embodiment, the rotor 22 may rotate in the TC supercharging mode. In this case, it is possible to start the operating of the pressure wave supercharger 20 quickly when the supercharging mode is switched from the TC supercharging mode to the PW supercharging mode or the EGR supercharging mode.

### (Third Embodiment)

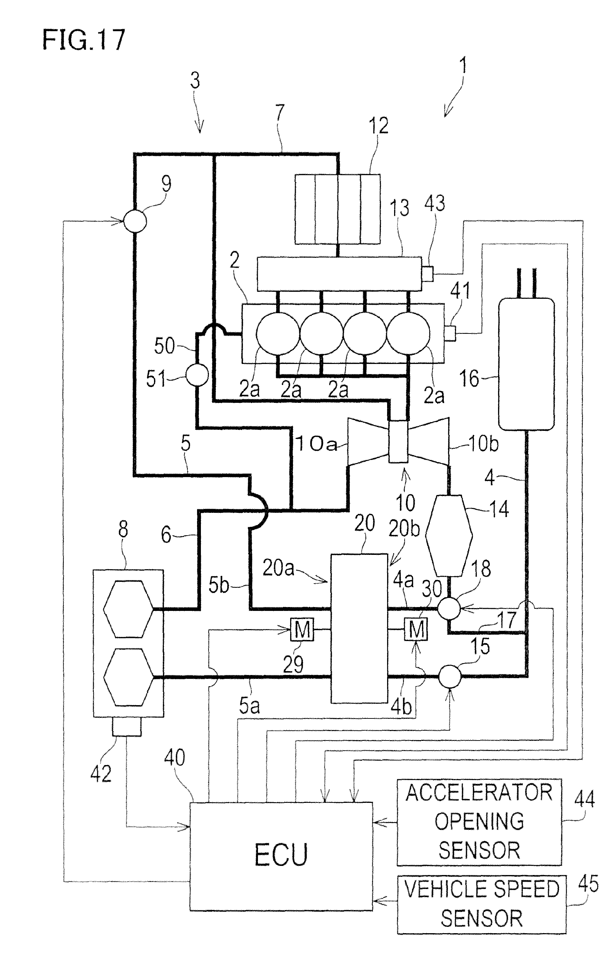

A third embodiment of the present invention will be described with reference so Fig. 17. Fig. 17 schematically shows main portions of an internal, combustion engine in which a supercharging system according to the third embodiment of the present invention is incorporates. In the present embodiment, the same components as these in the first embodiment are denoted by the same reference numeral and descriptions thereof will be omitted. As shown in this figure, in the third embodiment, the engine 1 is provided with a PCV passage 50 connecting the engine main body 2 and the intake passage 3. One end of the PCV passage 50 is connected to the inside of a crankcase (not shown) in the engine main body 2. The other end is connected to a section of the second branch passage 6 at the upstream side of the compressor 10a in the intake gas flow direction. The PCV passage 50 is provided to lead blow-by gas generated from the engine main body 2 into the intake passage 3. The PCV passage 50 is provides with a PCV control valve 51 to present backward flow of the intake gas to the engine main body 2 from the intake passage 3. In the present embodiment, the second control valve 11 is omitted.

According to the present embodiment, since the other end of the PCV passage 50 is connected to the intake passage 3 at the upstream side of the compressor 10a. Thereby, it is possible to vacuum the blow-by gas generated in the engine main body 2 by the negative pressure of the inlet of the compressor 10a sufficiently. Accordingly, it is possible two perform the ventilation of the blow-by gas in the crankcase sufficiently. Furthermore, since the other end of the PCV passage 50 is connected to the second branch passage 6, it is possible to present that the blow-by gas flows into the pressure wave supercharger 20. Accordingly, it is possible to prevent that the rotor 22 is locked by oil container in the blow-by gas. The other end of the PCV passage 50 may be connected to a section of the intake passage 3 that is located downstream of the branch point of the first branch passage 5 and upstream of the compressor 10a. Thereby, it is possible to prevent that the blow-by gas flows into the pressure wave supercharger 20. While the second control valve 11 is omitted in the embodiment in Fig. 17, the second control valve 11 may be provided on the second branch passage 6 in the third embodiment.

### (Fourth Embodiment)

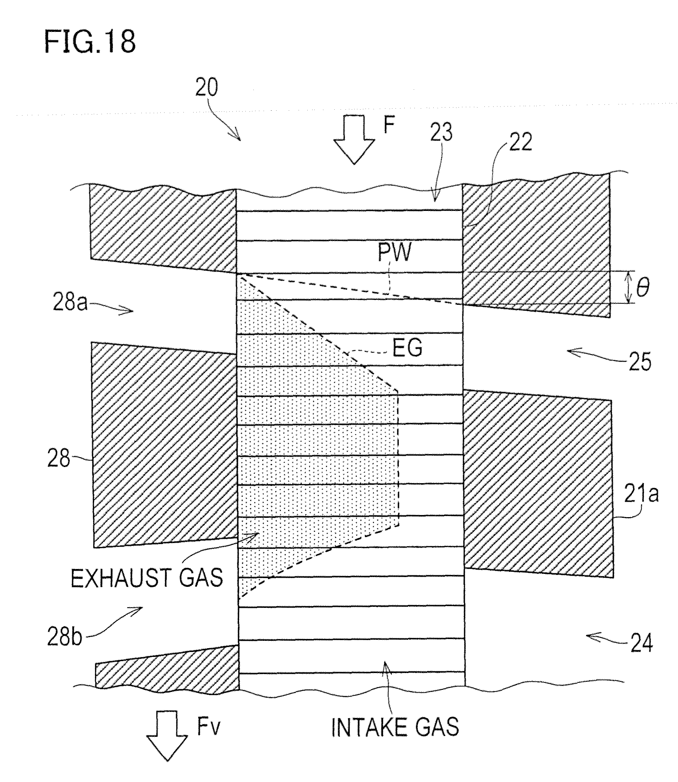

A fourth embodiment of the present invention will be described with reference to Figs. 18 to 21. Fig. 1 is preferred also in this embodiment with regard to the engine 1. In this embodiment, the control method of the turbocharger 10 and the pressure, wave supercharger 20 is different from the other embodiments. In this embodiment, the PW supercharging mode, the TC supercharging mode, and a re-acceleration reparation mode are provided as the supercharging mode. In the re-acceteration preparation mode, the engine 1 is supercharged by the pressure wave supercharger 20. In this case, the pressure, wave supercharger 20 is operated so that a part of the intake gas passes through to the exhaust gas side. Hereinafter, this operation mode is referred to as the low supercharging mode.

The low supercharging mode will be described with reference to Fig. 18. Fig. 18 shows a part of the pressure wave supercharger 20 being operated in the low supercharging mode developed along the rotation direction of the rotor 22. In Fig. 18, the broken line PW shows the movement of the pressure wave of the exhaust gas. Furthermore, the broken line EG shows the movement of the exhaust gas. In the low supercharging mode, as with the normal mode, the cell 23 connects with the intake gas outlet port 25 when the pressure wave reaches the other end of the cell 23. On the other hand, as shown in Fig. 18, the low supercharging mode, the cell 23 is disconnected from the intake gas outlet port 25 before the exhaust gas led into the cell 23 from the exhaust gas inlet port 28a reaches the other end of the cell 23. the exhaust gas and a part of the intake gas are remained in the cell 23. the exhaust gas and the intake gas are discharged to the exhaust passage 4 from the cell 23 when the rotor 22 rotates and the cell 23 connects to the exhaust gas outlet port 28b. The intake gas is charged in the cell 23 again when the rotor 22 further rotates and the cell 23 connects to the intake gas inlet port 24. Subsequently, these operations are repeated. In the low supercharging mode, a part of the intake gas is passed into the exhaust passage 4 in this manner. Thereby, the supercharging pressure of the low supercharging mode is lower than the supercharging pressure of the normal mode even though the rotation number of the rotor 22 is the same. Accordingly, the rotation number of the rotor 22 of the low supercharging mode is higher than the rotation number of the rotor 22 of the normal mode if the supercharging pressure is the same.

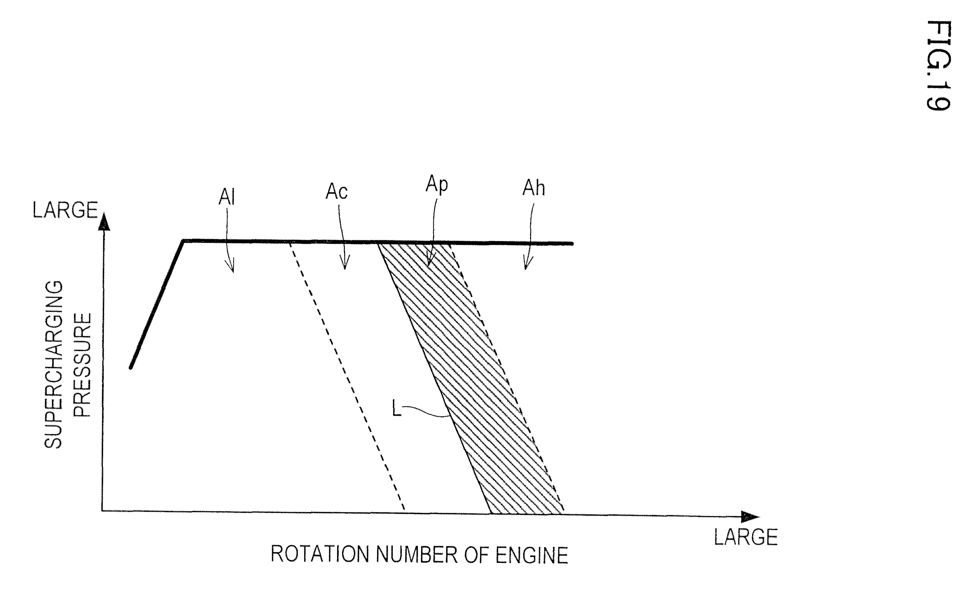

In this embodiment, the supercharging modes are switched in accordance with the operation state of the engine 1. Fig. 19 shows correspondence relationships among the rotation number of the engine 1, the supercharging pressure, and the supercharging modes. In a high rotation range Ah located to the right side of a line L in this figure, only the turbocharger 10 operates. On the other hand, in a low rotation range A1 located to the left side of the line L, only the pressure wave supercharger 20 operates. In a changeover range Ac provided in the tow rotation range A1, the pressure wave supercharger 20 operates in the low supercharging mode. The operation mode is switched to the low supercharging mode only when the engine 1 decelerates and the operation state of the engine 1 transitions from the high rotation range Ah to the low rotation range Al. As shown in this figure, a range located between the line L and predetermined rotation number in the low rotation range Al is set to the changeover range Ac. As mentioned abode, the supercharging mode switches to the TC supercharging mode if the operation state of the engine 1 is within the high rotation range Ah. The supercharging mode stitches to the PW supercharging mode if the operation state of the engine 1 is within the low rotation range Al. The supercharging mode switches to the re-acceleration reparation mode if the operation state of the engine 1 transitions from the high rotation range Ah to the low rotation range Al and the operation state of the engine I is within the changeover range Ac.

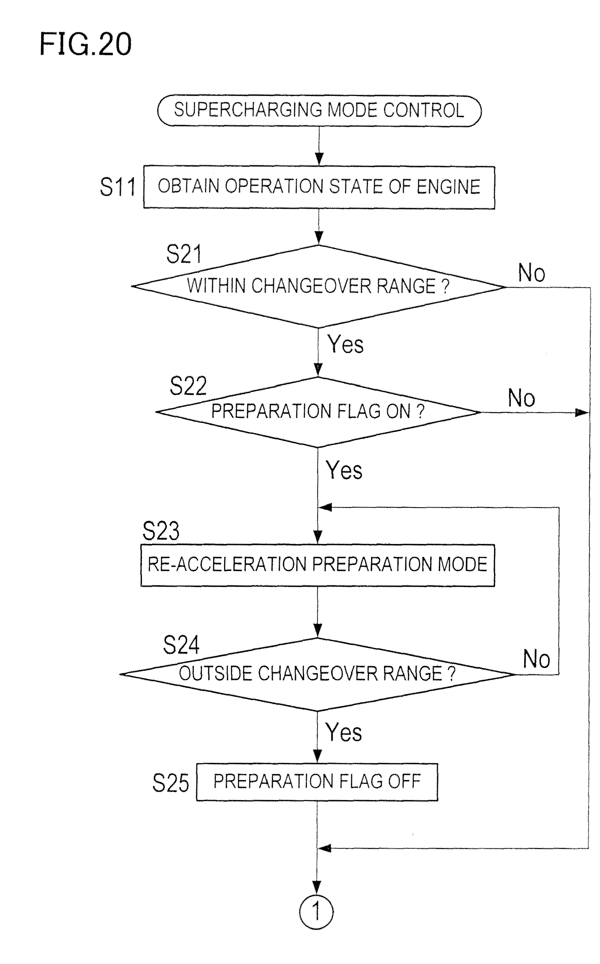

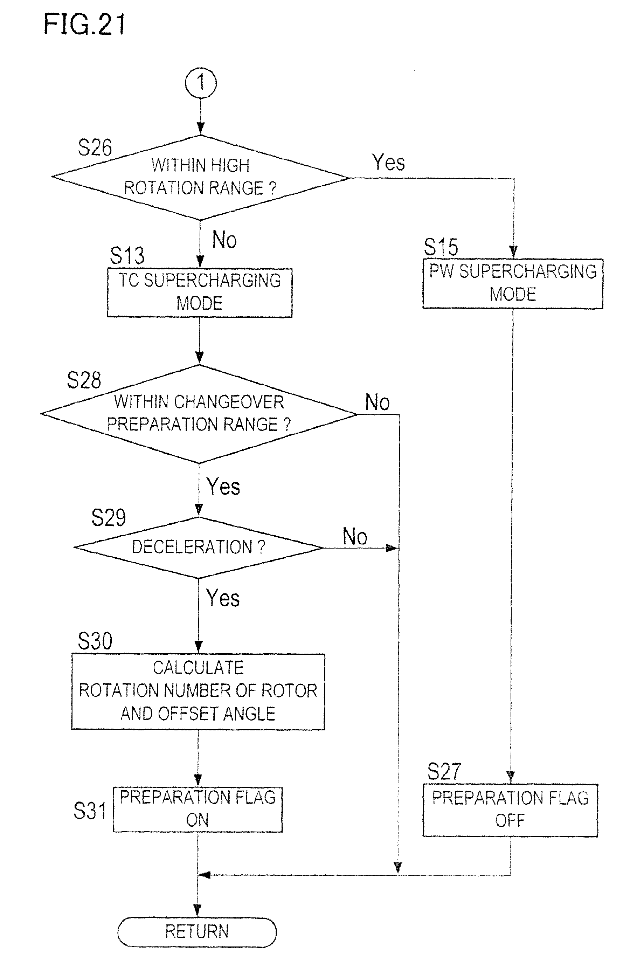

Figs. 20 and 21 show a supercharging mode control routine executed by the ECU 40 in this embodiment. In these figures, the same processes as those in Fig. 9 are denoted by the same reference numeral, and description thereof will be omitted. In step S11 of this controls routine, the ECU 40 first obtains the operation state of the engine 1. In next step S21, the ECU 40 determines whether or not the operation state of the engine 1 is within the changeover range Ac. This determination may be performed by storing the map of Fig. 19 in the ROM of the ECU 40 and preferring the map, for example. If the ECU 40 determines that the operation state of the engine 1 is outside the changeover range Ac, the ECU 40 proceeds to step S26 in Fig. 21 by skipping steps S22 to S25. On the other hand, if the ECU 40 determines that the operation state of the engine 1 is within the changeover range Ac, the ECU 40 proceeds to step S22 and determines whether or not a preparation flag is ON. The reparation flag shoes whether or not the rotation number of the rotor 22 and the offset angle θ are calculated in order to operate the pressure wave supercharger 20 in the low supercharging mode. The preparation flag is turned ON when the rotation number and the angle are calculated. If the ECU 40 determines that the preparation flag is OFF, the ECU 40 proceeds to step S26 in Fig. 21 by skipping steps S23 to S25.

On the other hand, if the ECU 40 determines that the preparation flag is ON, the ECU 40 proceeds to step S23 and switches the supercharging mode to the re-acceleration preparation mode. Specifically, the first control valve 9 is fully opened. The second control valve 11 is fully closed. The switching valve 18 is controlled so that the exhaust gas is led to the pressure wave supercharger 20. The exhaust gas control valve 15 is fully opened. The first motor 29 and the second motor 30 are controlled so that the pressure wave supercharger 20 operates in the low supercharging mode. At this time, the motors 29 and 30 are controlled so that the rotor 22 rotates at the rotation number calculated preliminarily, and the offset angle θ is changed to an angle calculated preliminarily. By executing this process, the ECU 40 functions as a re-acceleration preparation device of the present invention.

In next step S24, the ECU 40 determines whether or not the operation state of the engine 1 is outside the changeover range Ac. If the ECU 40 determines that the operation state of the engine 1 is within the changeover range Ac, the ECU 40 returns to step S23. The ECU 40 repeats the steps S23 and S24 until the operation state of the engine 1 becomes outside the changeover range Ac. On the other hand, if the ECU 40 determines that the operation state of the engine 1 is outside the changeover range Ac, the ECU 40 proceeds to step S25 and turns off the preparation flag. Thereafter, the ECU 40 proceeds to step S26 in Fig. 21.

In step S26, the ECU 40 determines whether or not the operation state of the engine 1 is within the high rotation range Ah. If the ECU 40 determines that the operation state of the engine 1 is within the low rotation range Al, the ECU 40 proceeds to step S15 and switches the supercharging mode to the PW supercharging mode. In step S27, the ECU 40 turns off the preparation flag. Thereafter, the ECU 40 ends the current control routine.

On the other hand, if the ECU 40 determines that the operation state of the engine 1 is within the high rotation range Ah, the ECU 40 proceeds to step S13 and switches the supercharging mode to the TC supercharging mode. In step S28, the ECU 40 determines whether or not the operation state of the engine 1 is within a changeover preparation range Ap. The changeover preparation range Ap is provided as a reference to determine whether or not the pressure wave supercharger 20 is prepared to operate in the low supercharging mode. As shown in Fig. 19, a range located between the line L and predetermined rotation number in the high rotation range Ah is set to the changeover preparation range Ap. If the ECU 40 determines that the operation state of the engine 1 is outside the changeover preparation range Ap, the ECU 40 ends the current control routine.

On the other hand, if the ECU 40 determines that the operation state of the engine 1 is within the changeover preparation range Ap, the ECU 40 proceeds to step S29 and determines whether not the engine 1 is decelerating. This determination may be performed on the basis of a change of the rotation number of the engine 1, for example. If the ECU 40 determines that the engine 1 is not decelerating, the ECU 40 ends the current control routine.

On the other hand, the ECU 40 determines that the engine 1 is decelerating, the ECU 40 proceeds to step S30 and calculates the rotation number of the rotor 22 and the offset angle θ in order to operate the pressure wave supercharger 20 in the low supercharging mode. These values correspond to target values of the present invention. The rotation number of the rotor 22 is calculated on the basis of the rotation number of the engine 1 so that the supercharging pressure does not decrease suddenly even though the supercharging mode is switched from the TC supercharging mode to the re-acceleration preparation mode. Specifically, the rotation number of the rotor 22 increases as the rotation number of the engine 1 increases. The offset angle θ is calculated in accordance with the amount (hereafter referred to as the bypass amount) of the intake gas to be discharged from the pressure wave supercharger 20 to the exhaust passage 4 in the low supercharging mode. The bypass amount increases as the rotation number of the engine 1 increases. The bypass amount increases as the offset angle θ decreases. The offset angle θ decreases as the rotation number of the engine I increases and the bypass amount increases. By executing this process, the ECU 40 functions as a calculation device of the present invention. In step S31, the ECU 40 turns on the preparation flag. Thereafter, the ECU 40 ends the current control routine.

According to this embodiment, the supercharging mode is switched to the re-acceleration preparation mode when the engine 1 decelerates and the operation state of the engine 1 transitions from the high rotation range Ah to the low rotation range Al. Thereby, the rotor 22 of the pressure wave supercharger 20 rotates faster than the normal mode. In this case, it is possible to increase the supercharging pressure by only changing the offset angle θ when the engine 1 is requested re-acceteration. Accordingly, it is possible to re-accelerate the engine 1 quickly. In the low supercharging mode, the ECU 40 may not control both the rotation number of the rotor 22 and the offset angle θ. The ECU 40 may switch the supercharging mode to the low supercharging mode by controlling only one of them.

### (Fifth Embodiment)

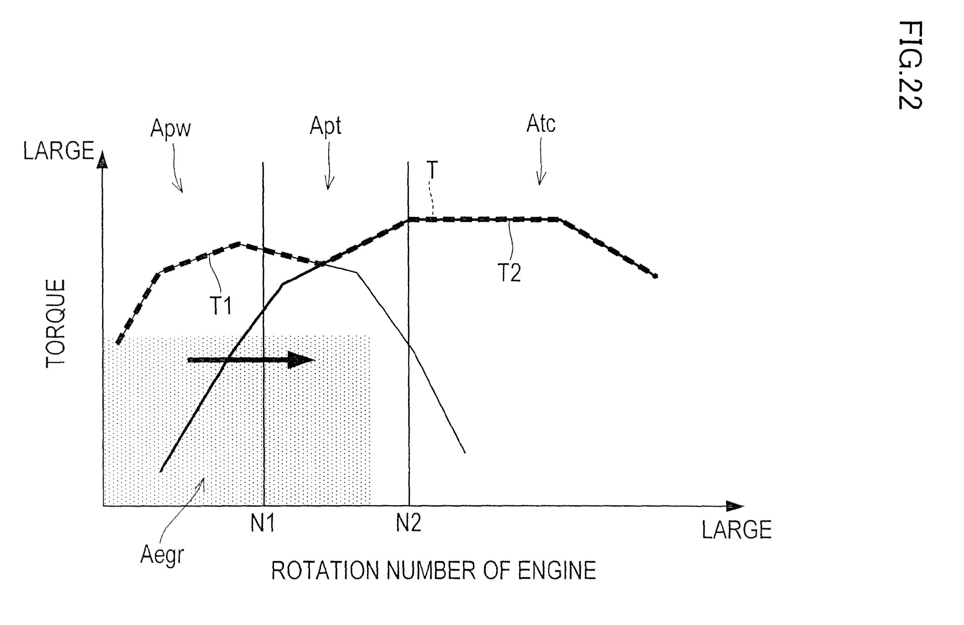

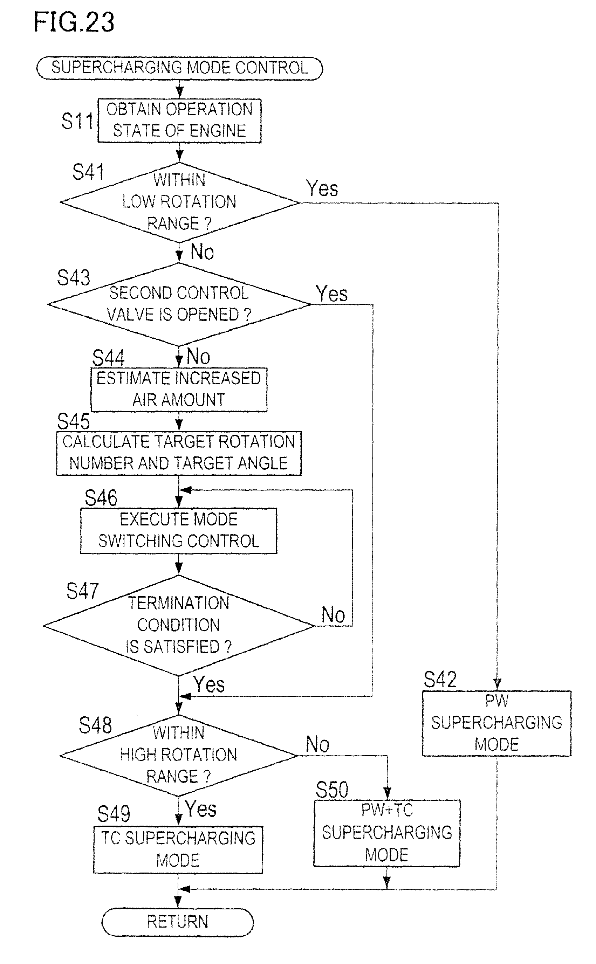

A fifth embodiment of the present invention will be described with reference to Figs. 22 and 23. Fig. 1 is referred also in this embodiment with regard to the engine 1. In this embodiment, the control method of the turbocharger 10 and the pressure wave supercharger 20 is different from the other embodiments. In this embodiment, the PW supercharging mode, the TC supercharging mode, and a PW+TC supercharging mode are provided as the supercharging mode. In the PW+TC supercharging mode, the engine 1 is supercharged by the pressure wave supercharger 20 and the turbocharger 10.

Fig. 22 is a map which shows correspondence relationships among the rotation number and torque of the engine 1, and the three supercharging modes. In this figure, the engine 1 is supercharged by only the pressure wave supercharger 20 in a low rotation range PW that is lower than the rotation number N1. In this figure, the engine 1 is supercharged by the pressure wave supercharger 20 and the turbocharger 10 in a medium rotation range Apt that is higher than or equal to the rotation number N1 and lower than the rotation number N2. In this figure, the engine I is supercharged by only the turbocharger 10 in a high rotation range Atc that is higher than the rotation number N2. That is, the supercharging mode is switched to the PW supercharging mode when the operation state of the engine 1 is within the low rotation range PW. The supercharging mode is switched to the PW+TC supercharging mode when the operation state of the engine 1 is within the medium rotation range Apt. The supercharging mode is switched to the TC supercharging mode when the operation state of the engine I is within the high rotation range Atc. In the EGR range Aegr provided in the low rotation range Apw and medium rotation range Apt, the pressure wave supercharger 20 operates in the EGR mode.

The second control valve 11 is opened when the supercharging mode is switched from the PW supercharging mode to the PW+TC supercharging mode. Thereby, since both the first control valve 9 and the second control valve 11 are opened, the amount of the intake gas supplied to the cylinders 2a increases suddenly. Hereinafter, the increased amount in this case will be also referred to as the increased air amount because air flows through the second branch passage 6. In this embodiment, the amount of air which is supplied to the cylinders 2a via the pressure wave supercharger 20 is decreased preliminarily by the increased air amount before the second control valve 11 is opened. Whereafter, the second control valve 11 is opened. Hereinafter, this control will be preferred to as a mode switching control.

Fig. 23 shows a supercharging mode control routine executed by the ECU 40 in this embodiment. In this figure, the same processes as those in Fig. 9 are denoted by the same reference numeral, and description thereof will be omitted. By executing this control routine, the ECU 40 functions as an EGR control device of the present invention. In step S11 of this control routine, the ECU 40 first obtains the operation state of the engine 1. In next step S41, the ECU 40 determines whether or not the operation state of the engine I is within the low rotation range Apw. If the ECU 40 determines that the operation state of the engine I is within the low rotation range Apw, the ECU 40 proceeds to step S42 and switches the supercharging mode to the PW supercharging mode. In this case, if the operation state of the engine 1 is within the EGR range Aegr, the first motor 29 and the second motor 30 are controlled so that the pressure wave supercharger 20 is operated in the EGR mode. Thereafter, the ECU 40 ends the current control routine.

On the other hand, if the ECU 40 determines that the operation state of the engine 1 is outside the low rotation range Apw, the ECU 40 proceeds to step S43 and determines whether or not the second control valve 11 is opened. If the ECU 40 determines that the second control valve 11 is opened, the ECU 40 proceeds to step S48 by skipping steps S44 to S47. On the other hand, if the ECU 40 determines that the second control valve 11 is closed, the ECU 40 proceeds to step S44 and estimates the increased air amount. As well known, since the compressor 10a is driven by the turbine 10b, the increased air amount depends on the flow rate of exhaust gas. Since the flow rate of exhaust gas varies with the rotation number and the load of the engine 1, it is possible to estimate the increased air amount based can the rotation number and the load of the engine 1. For example, the relations among the rotation number and the load of the engine 1, and the increased air amount are obtained in advance through experiments or the like and stored as a map in the ROM of the ECU 40. The increased air amount may be estimated by referring the map.

In next step S45, the ECU 40 calculates a target rotation number of the rotor 22 and a target angle of the offset angle θ for the mode switching control. As mentioned above, in the mode switching control, the amount of air which is supplied to the cylinders 2a via the pressure wave supercharger 20 is decreased by the increased air amount. In this case, by increasing the amount of the exhaust gas circulated from the pressure, wave supercharger 20, the amount of the air is decreased. The amount of the exhaust gas circulated from the pressure wave supercharger 20 is increased as the rotation number of the rotor 22 is decreased. Moreover, the amount of the circulated exhaust gas is increased as the offset angle θ is decreased when the rotation number of the rotor 22 is decreased. Thereby, the target rotation number may be calculated based on the increased air amount so that the target rotation number is decreased as the increased air quantity is increased. The target angle may be calculated based on the increased air amount so that the target angle is decreased as the increased air amount is increased. For example, the relation between the increased air amount and the target rotation number and relation between the increased air amount and the target angle are obtained in advance through experiments or the like and stored as maps in the ROM of the ECU 40. The ECU 40 may calculate the target rotation number and the target angle by preferring the maps. If the pressure wave supercharger 20 is operated in the EGR mode, the calculation results may be corrected so that the ratio of the exhaust gas in the intake gas is not changed.

In next step S46, the ECU 40 executes the mode switching controls using the target rotation number and the target angle calculated as above. Specifically, the first motor 29 is controlled so that the rotation number of the rotor 22 reaches the target rotation number. The second motor 30 is controlled so that the offset angle θ reaches the target angle. The second controls valve 11 is then fully opened. In next step S47, the ECU 40 determines whether or not a predetermined termination condition is satisfied. The predetermined termination condition is determined to be satisfied if a predetermined time elapses after the mode switching control is performed, for example. If the ECU 40 determines that the predetermined termination condition is not satisfied, the ECU 40 returns to step S46 and repeats steps S46 and S47 until the predetermined termination condition is satisfied.

On the other hand, if the ECU 40 determines that the predetermined termination condition is satisfied, the ECU 40 proceeds to step S48 and determines whether or not the operation state of the engine 1 is within the high rotation range Atc. If the ECU 40 determines the operation state of the engine is within the high rotation range Atc, the ECU 40 proceeds to step S49 and switches the supercharging mode to the TC supercharging mode. Thereafter, the ECU 40 ends the current control routine. On the other hand, if the ECU 40 determines that the operation state of the engine 1 is not within the high rotation range Atc, the ECU 40 proceeds to step S50 and switches the supercharging mode to the PW+TC supercharging mode. In this case, if the operation state of the engine 1 is within the EGR range Aegr, the first motor 29 and the motor 30 are controlled so that the pressure wave supercharger 20 is operated in the EGR mode. Thereafter, the ECU 40 ends the current control routine.

As mentioned above, according to this embodiment, if the second control valve 11 is opened, the amount of air supplied to the cylinder 2a is first decreased by the increased air amount. Thereafter, the second control valve 11 is opened. Thereby, it is possible to suppress the sudden increase of the amount of air supplied to the cylinder 2a when the second control valve 11 is opened. Accordingly, it is possible to suppress increasing of nitrogen oxides (NOx) in the exhaust gas when the second control valve I I is opened. In the mode switching control, the ECU 40 may not control both the rotation number of the rotor 22 and the offset angle θ. The ECU 40 may control only one of them.

### (Sixth Embodiment)

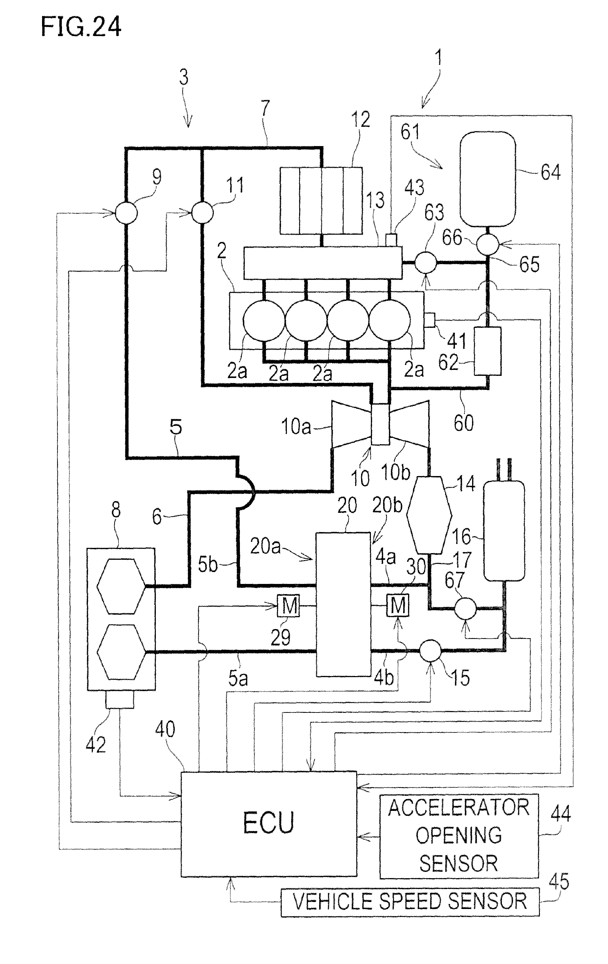

A sixth embodiment of the present invention will be described with reference to Figs. 24 to 27. Fig. 24 schematically shows main portions of an internal combustion engine in which a supercharging system according to the sixth embodiment of the present invention is incorporated. In this embodiment, same components as those in other embodiments are denoted by same reference numeral, and descriptions thereof will be omitted. As shown in this figure, the sixth embodiment differs from the other embodiments in that an EGR passage 60 connects the exhaust passage 4 and the intake passage 3 to each other and the EGR passage 60 is provided with a supercharging assist system 61. The EGR passage 60 connects the exhaust passage 4 upstream of the turbine 10b with the intake passage 3 downstream of the inter-cooler 12. The EGR passage 60 is provided with an EGR cooler 62 and an EGR valve 63. The EGR cooler 62 and the EGR valve 63 may be publicly-known cooler and valve, thus detailed descriptions thereof will be omitted. The supercharging assist system 61 includes a pressure accumulation tank 64. The pressure accumulation tank 64 is configured as a pressure contained capable of storing pressurized gas. The pressure accumulation tank 64 is connected to a section of the EGR passage 60 between the EGR cooler 61 and the EGR valve 63 by a connection passage 65. The connection passage 65 is provided with an assist valve 66 as a valve device capable of opening and closing the passage 65. In this embodiment, the exhaust gas control valve 15 and the switching valve 18 are omitted from the exhaust passage 4. The bypass passage 17 is provided with a bypass valve 67 capable of opening and closing the passage 17. The EGR valve 63, the assist valve 66, and the bypass valve 67 are controlled by the ECRU 40.

The pressure wave supercharger 20 of this embodiment is the same to that described in the second embodiment. Accordingly, by switching the valve plate 28 to the disconnection state and stopping the rotor 22, it is possible to present the exhaust gas from flowing to downstream of the pressure wave supercharged 20.

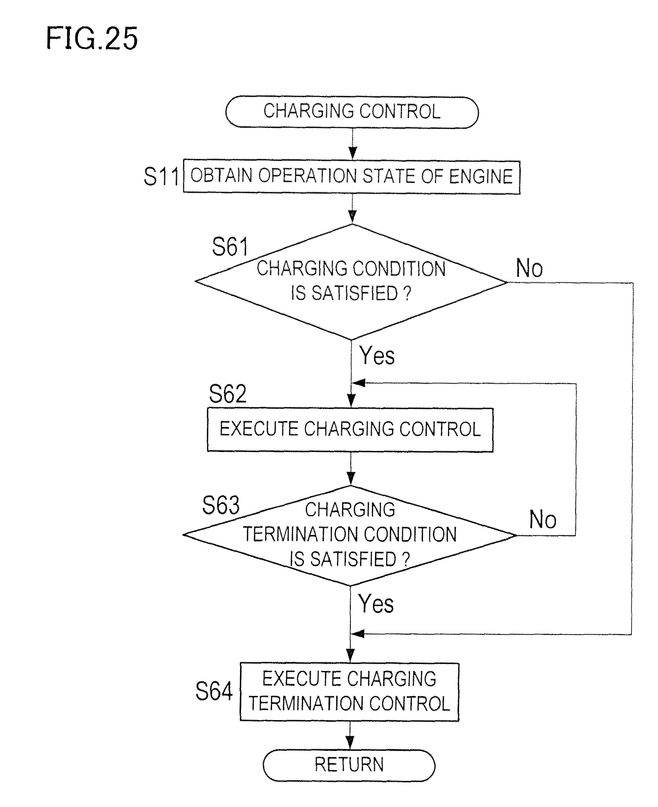

In this embodiment, the exhaust gas is pressurized and stored in the in the pressure accumulation tank 64 if a predetermined charging condition is satisfied. The stored exhaust gas is used if a predetermined assist condition for assisting in operation of the turbocharger 10 is satisfied, if the engine 1 stops, or the like. Fig. 25 shows a charging control routine executed by the ECU 40 of the present embodiment repeatedly in a predetermined cycle during operation of the engine 1 in order to store the exhaust gas in the pressure accumulation tank 64. This control routine, is executed parallel to the other control routines executed by the ECU 40. In this control routine, the same processes as those in Fig. 9 are denoted by the same reference numeral, and description thereof will be omitted. By executing this control routine, the ECRU 40 functions as a pressure accumulation control device of the present invention.

In step S11 of this control routine, the ECU 40 first obtains the operation state of the engine 1. In next step S61, the ECU 40 determines whether or not the predetermined charging condition is satisfied. The predetermined charging condition is determined to be satisfied if the vehicle amounted with the engine 1 is decelerating and the pressure in the pressure accumulation tank 64 is less than a predetermined charging pressure, for example. If` the ECRU 40 determines that the charging condition is not satisfied, the ECU 40 proceeds to step S64 by skipping steps S62 and S63.

On the other hand, if the ECU 40 determines that the charging condition is satisfied, the ECU 40 proceeds to step S62 and executes a charging control for storing the exhaust gas in the pressure accumulation tank 64. In the charging control, the EGR valve 63 and the bypass valve 67 are closed. The first motor 29 is controlled so as to stop the rotor 22. The second motor 30 is controlled so as to switch the state of the valve plate 28 to the disconnection state. The assist valve 66 is opened. As a result, it is possible to store the exhaust gas discharged from the cylinder 2a in the pressure accumulation tank 64.

In next step 563, the ECU 40 determines whether or not a predetermined charging termination condition is satisfied. The charging termination condition is determined to be satisfied if the running state of the vehicle changed to any other state than deceleration or if the pressure in the pressure accumulation tank 64 exceeds the charging pressure, for example, If the ECRU 40 determines that the charging termination condition is not satisfied, the ECU 40 returns to step S62 and repeats steps S62 and S63 until the charging termination condition is satisfied.

On the other hand, if the ECRU 40 determines that the charging termination condition is satisfied, the ECU 40 proceeds to step S64 and executes a charging termination control. In the charging termination control, first, the assist valve 66 is fully closed. Thereafter, the EGR valve 63 and the bypass valve 67 are released from the control that keeps these valves fully closed. Furthermore, the first motor 29 and the second motor 30 are released from the control that these motors 29, 30 are kept in stopped state so as to be able to supercharge the engine 1 by the pressure wave supercharger 30. Thereafter, the ECRU 40 ends the current control routine.

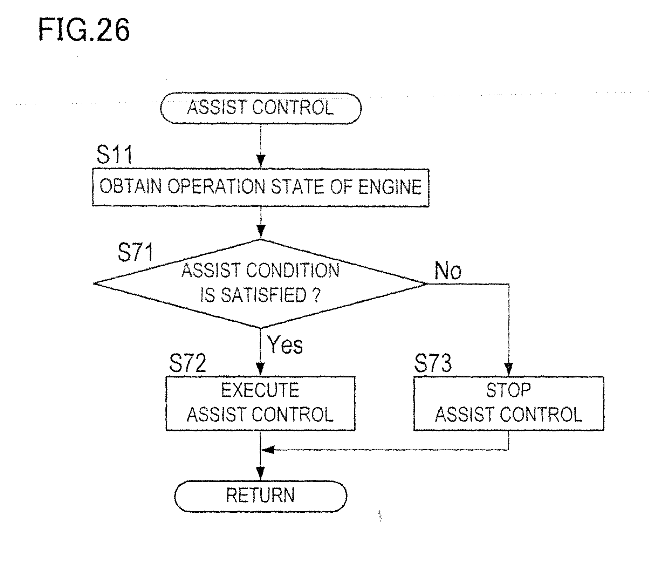

Fig. 26 shows an assist control routine executed by the ECU 40 repeatedly in a predetermined cycle during operation of the engine 1 in order to assist in operation of the turbocharger 10. In this control routine, the same processes as those in Fig. 9 are denoted by the same reference numeral, and descriptions thereof will be omitted. In step S11 of this control routine, the ECU 40 first obtains the operation of the engine 1. In next step S71, the ECU 40 determines whether or not a predetermined assist condition is satisfied. The assist condition is determined to be satisfied if the rotation number of the engine I is greater than or equal to a predetermined rotation number and the accelerator opening is greater than or equal to a predetermined opening degree. That is, the assist condition is determined to be satisfied if the engine I is operated at a high rotation and at a high load.

If the ECU 40 determines that the assist condition is satisfied, the ECU 40 proceeds to step S72 and executes an assist controls. In the assist control, first, the EGR valve 63 is closed. Then, the assist valve 66 is opened. Hereafter, the ECRU 40 ends the current control routine. On the other hand, if the ECRU 40 determines that the assist condition is not satisfied, the ECU 40 proceeds to step S73 and stops the assist control. In this process, first the assist valve 66 is closed.
Then, the EGR valve 63 is released from the control that keeps this valve fully closed. Thereafter, the ECU 40 ends the current control routine.

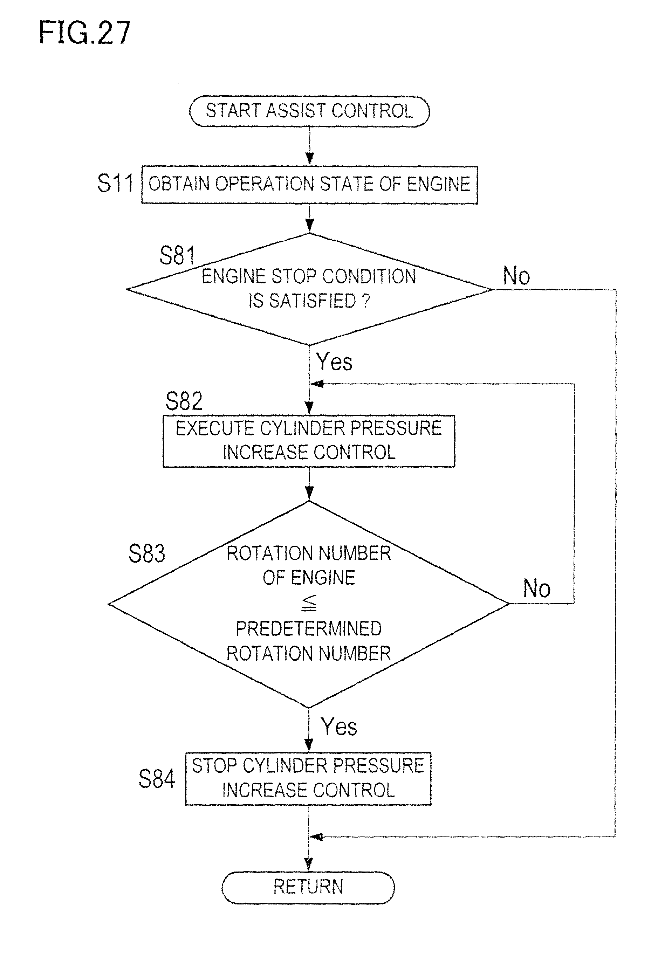

Fig. 27 shows a start assist control routine executed by the ECU40 repeatedly in a predetermined cycle during operation of the engine 1 in order to increase the pressure in the cylinder 2a while the engine 1 Stops. This control routine is executed parallel to the other control routines executed by the ECU 40. By executing this control, the ECU 40 functions as a start assist control device of the present invention. In step S11 of this control routine, the ECU 40 first obtains the operation state of the engine 1. In next step S81, the ECU 40 determines whether or not a predetermined engine stop condition is satisfied in order to stop the engine 1. The engine stop condition is determined to be satisfied if a driver requests the stop of the engine 1 as in the case that an ignition switch is turned off, for example. IF the engine 1 is subjected to idle stop control which strops the engine I when a predetermined stop condition is satisfied, the engine stop condition is determined to be satisfied when the predetermined stop condition is satisfied.
The predetermined stop condition is determined to be satisfied if the vehicle speed is 0 and this state continues for a predetermined period of time. If the ECU 40 determines that the engine stop condition is not satisfied, the ECU 40 ends the current control routine.

On the other hand, the ECU 40 determines that the engine stop condition is satisfied, the ECU 40 proceeds to step S82 and executes a cylinder pressure, increase control. In the cylinder pressure increase control, first, the second controls valve 11 and the EGR valve 63 are closed. Then, the assist valve 66 is opened. Thereby, since the exhaust gas in the pressure accumulation tank 64 assisis in operations of the pressure wave supercharger 20, the pressure in each cylinder 2a increase;. In next step S83, the ECU 40 determines whether or not the rotation number of the engine 1 is lower than of equal to a predetermined rotation number. This predetermined rotation number is set as a criterion to determines whether or not the engine I strops. If the ECU 40 determines that the rotation number of the engine 1 is higher than the predetermines rotation number, the ECU 40 returns to step S82 and repeats steps S82 and S83 until the rotation number or the engine 1 becomes lower than or equal to the predetermined rotation number.

On the other hand, the ECU 40 determines that the rotation number of the engine 1 is lower than or equal to the predetermined rotation number, the ECU 40 proceeds to step S84 and stops the cylinder pressure increase control. In this process, first, the assist valve 66 is closed. Then, the second control valve 11 and the EGR valve 63 are released from the control that keeps these values fully closed. Thereafter, the ECU 40 ends the current control routine.

According to this embodiment, it is possible to assist the turbocharger 10 by the exhaust gas stored in the pressure accumulation tank 64. Thereby, it is possible to start the turbocharger 10 quickly when the supercharging mode is switched. Accordingly, it is possible to twitch the supercharging modes to each other smoothly. Furthermore, in this embodiment, since the pressure in the cylinder 2a is increased when the engine I stops, the engine 1 stops while the pressure in the cylinder 2a remains high. Thereby, since it is possible to increase the pressure in the cylinder 2a quickly at the next startup, it is possible to start the engine 1 quickly.

In audition, in this embodiment, the valve plate 28 may switch to the disconnection state and the rotor 22 may stop when starting the engine I of the engine body 2 whose temperature approximates to the ambient temperature. Thereby, since it is possible to increase the temperature of the exhaust gas in the exhaust passage 4, it is possible to warm up the catalyst 14 quickly.

The present invention is not limited to the above-described embodiments, and may be executed in various models. For example, the engine to which the supercharging system of the present invention is applied is not limited to the diesel engine. The present invention may be applied to a spark-ignited internal combustion engine that uses a spark plug to ignite air-fuel mixture led into the cylinder. The turbocharger may be provided with a variable nozzle that changes a flow passage area of an inlet of the turbine. The turbocharger may also be provided with a waste gate valve that decreases an amount of exhaust gas flowing into the turbine.

The above described embodiment may be combined appropriately with each other, as long as they do not bother each other. For example, the third embodiment may be combined with the other embodiments.

## Claims

1. A supercharging system for an internal combustion engine comprising:
a turbocharger that includes a turbine which is provided in an exhaust passage of the internal combustion engine, and a compressor which is provided in an intake passage of the internal combustion engine and is driven by the turbine; and
a pressure wave supercharger that includes a case which is connected to the intake passage via an intake gas inlet port and an intake gas outlet port provided on one end face and is connected to the exhaust passage via an exhaust gas inlet port and an exhaust gas outlet port provided on the other end face opposing the one end face, and a rotor which is arranged in the case and divides an inside of the case plural cells penetrating in a direction of a rotation axis line, and
that performs supercharging of the internal combustion engine by increasing a pressure of gas led into each of the cells from the intake gas inlet port using a pressure wave of exhaust gas led into the cell from the exhaust gas inlet port and discharging from the intake gas outlet port to the intake passage the gas pressurized, wherein
the case of the pressure wave supercharger is connected to the intake passage upstream of the compressor via the intake gas inlet port, and is connected to the intake passage downstream of the compressor via the intake gas outlet port, and is connected to the exhaust passage downstream of the turbine via the exhaust gas inlet port and the exhaust gas outlet port.

2. The supercharging system according to claim 1, wherein
the pressure wave supercharger includes a driving device which drives the rotor and is capable of varying a rotation number of the rotor.

3. The supercharging system according to claim 1 or 2, wherein
the pressure wave supercharger is provided with a phase change mechanism which is capable of varying a position of the intake gas outlet port with respect to the exhaust gas inlet port by rotating around the rotation axis line at least either one of the one end face and the other end face.

4. The supercharging system according to any one of claims 1 to 3, further comprising
a supercharging, control device which controls the pressure wave supercharger and the turbocharger so that the internal combustion engine is supercharged by the pressure wave supercharger when the rotation number of the internal combustion engine is within a predetermined low rotation range, and the internal combustion engine is supercharged by the turbocharger when the rotation number of the internal combustion engine is within a predetermined high rotation range which is higher than the low rotation range.

5. The supercharging system according to any one of claims 1 to 4, wherein
the exhaust passage is provided with a bypass passage which leads the exhaust gas to the downstream side of the pressure wave supercharger by bypassing the pressure wave supercharger, and a bypass valve which opens and closes the bypass passage.

6. The supercharging system according to any one of claims 1 to 4, wherein
the exhaust passage is provided with a bypass passage which leads the exhaust gas to the downstream side of the pressure wave supercharger by bypassing the pressure wave supercharger, and
the pressure wave supercharger is provided with a connection switching device which is capable of switching between a connection state that the inside of the case is connected to the exhaust passage via the exhaust gas inlet port and the exhaust gas outlet port, and a disconnection state that the exhaust gas inlet port and the exhaust gas outlet port are closed so that the connection in the connection state is disconnected.

7. The supercharging system according to claim 6, further comprising
a connection control device which switches the connection switching device to the disconnection state when the internal combustion engine is supercharged by only the turbocharger.

8. The supercharging system according to claim 1, wherein
the pressure wave supercharger is provided with at least either one of a driving device and a phase change mechanism as a controlled object,
the driving device driving the rotor and being capable of varying a rotation number of the rotor, and
the phase change mechanism capable of varying a position of the intake gas outlet port with respect to the exhaust gas inlet port by rotating around the rotation axis line at least either one of the one end face and the other end face, and
the supercharging system further comprises a supercharging control device which controls the pressure wave supercharger and the turbocharger so that the internal combustion engine is supercharged by the pressure wave supercharger when the rotation number of the internal combustion engine is within a low rotation range which is less than a predetermined rotation number, and the internal combustion engine is supercharged by the turbocharger when the rotation number of the internal combustion engine is within a predetermined high rotation range which is higher than or equal to the predetermined rotation number, wherein
the supercharging control device includes a calculation device and a re-acceleration preparation device,
the calculation device calculating a target value of a control amount of the controlled object for controlling to operate the pressure wave supercharger in a state that a part of the intake gas passes through the intake passage to the exhaust passage via the pressure wave supercharger while the internal combustion engine is supercharged by the pressure wave supercharger, when the rotation number of the internal combustion engine is within the high rotation range and the rotation number of the internal combustion engine is expected to become less than the predetermined rotation number, and
the re-acceleration preparation device controlling the controlled object so that the control amount of the controlled object becomes the target value calculated by the calculation device when the rotation number of the internal combustion engine becomes less than the predetermined rotation number.

9. The supercharging system according to claim 1, wherein
the pressure wave supercharger is provided with at least either one of a driving device and a phase change mechanism as a controlled object,
the driving device driving the rotor and being capable of varying a rotation number of the rotor, and
the phase change mechanism capable of varying a position of the intake gas outlet port with respect to the exhaust gas inlet port by rotating around the rotation axis line as least either one of the one end face and the other end face, and
the supercharging system further comprises a supercharging control device which controls the pressure wave supercharger and the turbocharger so that the internal combustion engine is supercharged by the pressure wave supercharger when the rotation number of the internal combustion engine is within a predetermined low rotation range, and the internal combustion engine is supercharged by the pressure wave supercharger and the turbocharger when the rotation number of the internal combustion engine is within a predetermined medium rotation range which is higher than the low rotation range, and the internal combustion engine is supercharged by the turbocharger when the rotation number of the internal combustion engine is within a predetermined high rotation range which is higher than the medium rotation range,
and which is capable of controlling the controlled object so that the exhaust gas is circulated to the intake passage from the exhaust passage via the pressure wave supercharger while the internal combustion engine is supercharged by the pressure wave supercharger, wherein
the supercharging control device includes an EGR control device which adjusts an amount of the exhaust gas circulated to the intake passage via the pressure wave supercharger by controlling the operation of the controlled object so as to be suppress a variation of an amount of air in the intake gas after starting of the turbocharger when the rotation number of the internal combustion engine changes to the medium rotation range from the low rotation range.

10. The supercharging system according to any one of claims 1 to 9, wherein
the internal combustion engine is provided with a PCV passage, which connects with an inside of a crankcase of the internal combustion engine a section of the intake passage between the downstream side or a position where the case is connected via the intake gas inlet port and the upstream side of the compressor.

11. The supercharging system according to claim 2, wherein
the internal combustion engine is mounted of a vehicle,
the pressure wave supercharger is provided with a connection switching device which is capable of switching between a connection state that the inside of the case is connected to the exhaust passage via the exhaust gas inlet port and the exhaust gas outlet port, and a disconnection state that the exhaust gas inlet port and the exhaust gas outlet port are closed so that the connection in the connection state is disconnected, and
the supercharging system comprises a pressure accumulation tank and a pressure accumulation control device,
the pressure accumulation tank being capable of leading gas from the exhaust passage at the upstream side of the turbine, capable of supplying gas to the exhaust passage at the upstream side of the turbine, and capable of storing pressurized gas inside thereof, and
the pressure, accumulation control device switching the connection switching device to the disconnection state and controlling the driving device so that the rotor is stopped when the vehicle decelerates.

12. The supercharging system according to claim 4, further comprising,
an pressure accumulation tank which is capable of leading gas from the exhaust passage at the upstream side of the turbine, capable of supplying gas to the exhaust passage at the upstream side of the turbine, and capable of storing pressurized gas inside thereof; any
a valve device which is capable of switching between a connection position where the pressure accumulation tank is connected to the exhaust passage, and a disconnection position where the connection in the connection position is disconnected,
wherein
the supercharging control device switches the valve device to the connection position when the rotation number of the internal combustion engine changes from the low rotation range to the high rotation range and the turbocharger is started.

13. The supercharging system according to claim 1, further comprising,
an pressure accumulation tank which is capable of leading gas from the exhaust passage at the upstream side of the turbine, capable of supplying gas to the exhaust passage at the upstream side of the turbine, and capable of storing pressurized gas inside thereof;
a valve device which is capable of switching between a connection position where the pressure accumulation tank is connected two the exhaust passage and a disconnection position where the connection in the connection position is disconnected; and,
a start assist control device which twitches the valve device to the connection position when a predetermined engine stop condition is satisfied in order to stop the internal combustion engine.
